(19)

**Europäisches Patentamt**
**European Patent Office**
**Office européen des brevets**

(11) **EP 4 628 238 A1**

(12) **EUROPEAN PATENT APPLICATION**
published in accordance with Art. 153(4) EPC

(43) Date of publication:
**08.10.2025 Bulletin 2025/41**

(21) Application number: **24753233.6**

(22) Date of filing: **01.02.2024**

(51) International Patent Classification (IPC):
**B23K 9/18** (2006.01)   **B23K 9/095** (2006.01)
**B23K 35/30** (2006.01)   **C21D 8/02** (2006.01)
**C22C 38/00** (2006.01)   **C22C 38/12** (2006.01)
**C22C 38/58** (2006.01)

(52) Cooperative Patent Classification (CPC):
**B23K 9/095; B23K 9/18; B23K 35/30; C21D 8/02;
C22C 38/00; C22C 38/12; C22C 38/58**

(86) International application number:
**PCT/JP2024/003363**

(87) International publication number:
**WO 2024/166790 (15.08.2024 Gazette 2024/33)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **06.02.2023 JP 2023015801**

(71) Applicants:
• **JFE Steel Corporation
Tokyo 100-0011 (JP)**
• **JFE Engineering Corporation
Chiyoda-ku,
Tokyo 100-0011 (JP)**

(72) Inventors:
• **WATANABE, Kazufumi
Tokyo 100-0011 (JP)**
• **ISHIGAMI, Atsushi
Tokyo 100-0011 (JP)**
• **OKABE, Takatoshi
Tokyo 100-0011 (JP)**
• **IGI, Satoshi
Tokyo 100-0011 (JP)**
• **YANO, Yoshiaki
Tokyo 100-0011 (JP)**
• **ITO, Yusuke
Tokyo 100-0011 (JP)**

(74) Representative: **Haseltine Lake Kempner LLP
One Portwall Square
Portwall Lane
Bristol BS1 6BH (GB)**

(54) **WELDED JOINT OF STEEL PLATE AND METHOD FOR MANUFACTURING SAME**

(57)    There are provided a welded joint of steel plates having a plate thickness of 50 to 160 mm or more, the welded joint having sound weld metal free of welding defects, such as hot cracking and lack of fusion, and having both high strength and excellent low-temperature toughness, and a method for manufacturing the welded joint.

In the welded joint of the steel plates having a plate thickness T (mm) of 50 to 160 mm, the weld metal includes three or more layers, and the width W (mm) of each layer of the weld metal excluding a first layer and an outermost surface layer is in a range of 5.0 mm or more and 0.4T mm or less.

FIG. 1

$5.0\,(mm) \leq W_i\,(\text{EXCLUDING 1 AND p}) \leq 0.4T\,(mm)$
$A/p \leq 120.0\,(mm^2/\text{LAYER})$
$p/T \leq 0.40\,(\text{LAYER/mm})$

**Description**

Technical Field

The present invention relates to a welded joint of steel plates and a method for manufacturing the welded joint, and in particular, to a welded joint of steel plates having a plate thickness of 50 mm or more, the welded joint having been manufactured by submerged arc welding using a single pass per layer, and a method for manufacturing the welded joint.

Background Art

With the growth of the energy industry, for example, in order to improve the drilling efficiency of marine resources and the power generation efficiency, the size of offshore structures and offshore wind power generators built on the ocean is increasing. With the increase in the size of marine structures and offshore wind power generators, there is a demand for improving the strength of the foundations of these facilities. For this reason, the use of steel plates having a plate thickness of about 50 to 160 mm (hereinafter, also referred to as "thick plates") is studied as an example of materials to be used for foundations. In cold oceans, it is assumed that waves, drift ice, and so forth may collide with thick plates used in structures and so forth. Thus, the above-described thick plates also need to have excellent toughness at -40°C. In the manufacture of, for example, offshore structures and the facilities of offshore wind power generators in which such thick plates are used, an improvement in construction efficiency is an important issue. In particular, there is a demand for highly efficient welding of the above-described thick plates.

High heat input welding has been proposed as one of the highly efficient welding methods for thick plates. However, when high heat input welding is used to weld thick plates together, it is often difficult to ensure the toughness of the weld metal and the heat-affected zone.

For this reason, improvements in the efficiency of welding and the toughness of the weld metal when welding thick plates together have been studied. For example, Patent Literature 1 discloses a "two-electrode, one-side, single-pass, high-heat-input submerged arc welding method with excellent toughness of weld metal". The welding method disclosed in Patent Literature 1 is a method for welding steel plates in a single pass on one side by two-electrode submerged arc welding with a flux and welding wires serving as a first electrode and a second electrode, each steel plate having a plate thickness of 40 mm or more, containing, by mass%, C: 0.02% to 0.2%, Si: 0.01% to 1%, Mn: 0.1% to 2.5%, Al: 0.002% to 0.1%, and N: 0.001% to 0.015%, and being limited to containing P: 0.02% or less, S: 0.01% or less, and O: 0.01% or less, and the balance being Fe and incidental impurities, the flux being composed of, by mass%, $SiO_2$: 10% to 25%, MgO: 5% to 20%, CaO: 5% to 15%, $CaF_2$: 1% to 10%, $Al_2O_3$: 5% to 25%, $TiO_2$: 2% to 20%, Fe: 10% to 25%, and $B_2O_3$: 0.1% to 2.5%, and the welding wires containing, by mass%, C: 0.02% to 0.2%, Si: 0.01% to 1%, Mn: 0.5% to 2.5%, Al: 0.002% to 0.1%, Ti: 0.005% to 0.3%, and N: 0.001% to 0.015%, and being limited to containing P: 0.02% or less, S: 0.01% or less, and O: 0.01% or less, and the balance being Fe and incidental impurities. In addition, the welding method is a method performed under the conditions in which the diameter of the welding wire of the second electrode is 6 to 8 mm, and the proportion of the sectional area of the welding wire of the first electrode to the sectional area of the welding wire of the second electrode is 35% to 75%.

Patent Literature 2 discloses a "two-electrode high-heat-input submerged arc welding method". The welding method disclosed in Patent Literature 2 is a welding method with wires and a flux, each of the wires containing, by mass%, C: 0.02% to 0.18%, Si: 0.02% to 0.5%, Mn: 1.15% to 2.2%, Mo: 0.1% to 1.0%, Ni: 0.1% to 1.5%, and Ti: 0.005% to 0.05%, and being limited to containing P: 0.006% or less and S: 0.003% or less, and the balance being Fe and incidental impurities, and the flux being composed of $SiO_2$: 13% to 25%, MgO: 8% to 20%, CaO: 5% to 13%, $CaF_2$: 1% to 7%, $Al_2O_3$: 9% to 23%, $TiO_2$: 3% to 11%, Fe: 11% to 25%, $B_2O_3$: 0.1% to 0.6%, Mo: 1% to 4.3%, and Ni: 1% to 4.5%. According to this welding method, even in high heat input submerged arc welding with a welding heat input of 500 kJ/cm or more, the weld metal can have improved mechanical properties, and improved welding workability can be provided. It also discloses that the safety of building structures can be significantly enhanced, and at the same time, significantly increasing the welding efficiency can be significantly increased.

Narrow groove welding has been proposed as one of the highly efficient welding methods for thick plates. A reduction in the sectional area of the groove can reduce the amount of welding heat input and ensure the toughness of the weld metal and the heat-affected zone. However, the welding of thick plates by narrow groove welding is prone to cause a problem of occurrence of hot cracking and lack of fusion.

To address this issue, for example, Patent Literature 3 discloses a "narrow-groove submerged arc welding method". The welding method disclosed in Patent Literature 3 is a narrow-groove submerged arc welding method for heavy thick steel plates as described below. A backing material is brought into contact with the back side of a narrow groove having a groove angle of 1° to 5° and a root gap of 10 to 14 mm, and steel particles are placed in the groove to a height of 10 to 15 mm from the back side of the groove. Then narrow-groove submerged arc welding is performed with a fused flux by multi-layer welding using a single pass per layer, the flux containing, by mass% based on the total mass of the flux, a total of

$Al_2O_3$, $TiO_2$, and $CaF_2$: 50% to 70%, $SiO_2$: 10% to 20%, and other components of CaO, MnO, BaO, $K_2O$, $Na_2O$, and incidental impurities. According to Patent Literature 3, a sound weld free of welding defects, such as hot cracking, slag inclusion, and lack of fusion, can be obtained. It also discloses that the slag removability, the shape of a weld bead, and so forth are good, excellent welding workability is obtained, and welding can be performed without back chipping.

For example, Patent Literature 4 discloses a "highly efficient welding method for steel plates". The method disclosed in Patent Literature 4 includes a preparation step of preparing a double V groove on a pair of steel materials having a plate thickness of more than 50 mm and 100 mm or less, and a welding step of performing a single-pass welding with a flux on the pair of steels from front and back sides by multi-electrode submerged arc welding using two or more electrodes and six or less electrodes. The welding in the welding step is performed in which a welding current for a first electrode is an alternating current with a waveform ratio of 60% or more and 90% or less, and welding currents for other electrodes are an alternating current with a waveform ratio of 70% or more, or a negative direct current. The flux contains, by a mass percentage based on the total mass of the flux, $Al_2O_3$: 10% or more and 50% or less, and $SiO_2$: 16% or more and 30% or less, and further contains one or more of MgO, $TiO_2$, $CaF_2$, and MnO in a total amount of 10% or more and 60% or less, the MgO content being limited to 40% or less, the $TiO_2$ content being limited to 20% or less, the $CaF_2$ content being limited to 30% or less, and the MnO content being limited to 20% or less. It also discloses that the use of this submerged arc welding method can result in a weld metal having excellent toughness even at low temperatures; thus, the foundations of the facilities of wind power generators to be installed in cold regions can be efficiently manufactured.

Citation List

Patent Literature

PTL 1: Japanese Patent No. 4673710
PTL 2: Japanese Unexamined Patent Application Publication No. 2006-212676
PTL 3: Japanese Unexamined Patent Application Publication No. 2021-126696
PTL 4: International Publication No. 2013/073565

Summary of Invention

Technical Problem

However, the invention disclosed in Patent Literature 1, which aims to realize highly efficient welding by high heat input, aims to provide a welding method that can obtain high toughness with a 2-mm-V-notch Charpy absorbed energy of 70 J or more at 0°C. In other words, thick plates welded by the method described in Patent Literature 1 can be unsuitable for use in a cold environment of -40°C. In Patent Literature 2, the toughness of the weld metal portion is evaluated at 0°C, and the thick plates welded by the method described in the Patent Literature 2 is not assumed to be used in a cold environment of -40°C. Furthermore, the invention of Patent Literature 3, which aims to realize highly efficient welding by narrow groove welding, does not describe the mechanical properties of the weld metal and the mechanical properties of the heat-affected zone. Similarly, the invention of Patent Literature 4 does not describe the toughness of the heat-affected zone at low temperatures, and is directed to welding of steel materials having a plate thickness of more than 50 mm and 100 mm or less. Thus, Patent Document 4 does not describe any knowledge regarding welding of thick plates up to a maximum thickness of 160 mm, such as those used in offshore structures and foundation equipment for offshore wind power generators.

The present invention aims to solve the above-described problems in the related art, and to provide a welded joint of steel plates having a plate thickness of 50 to 160 mm, the welded joint having sound weld metal free of welding defects, such as hot cracking and lack of fusion, and having both high strength and excellent low-temperature toughness, and a method for manufacturing the welded joint.

The term "high strength" used here indicates that the yield strength (0.2% proof stress) at room temperature of a weld metal produced in accordance with the provisions of JIS Z 3111:2005 is 325 MPa or more, the tensile strength thereof is 520 MPa or more, and the tensile strength at room temperature of a welded joint is 520 MPa or more. The phrase "excellent low-temperature toughness" indicates that the absorbed energy ($_vE_{-40}$) of a Charpy impact test at a test temperature of -40°C for the weld metal and heat-affected zone of a welded joint produced in accordance with the provisions of JIS Z 3128:2017 is 30 J or more.

Solution to Problem

[Details Leading to the Invention]

In order to achieve the above-described object, the inventors have first conducted intensive studies on a weld metal shape that can efficiently and soundly form a welded joint of steel plates (hereinafter, sometimes referred to as a "base metal") having a plate thickness of 50 to 160 mm. The total weld length of the foundations for offshore structures and offshore wind power plants can exceed 1.0 km per structure. In order to achieve high efficiency, it is effective to reduce the number of weld metal layers. Here, the inventors defined high efficiency as when the second ratio [p/T] of the total number of weld metal layers p and the plate thickness T is 0.40 layers/mm or less. It has been found that if the deposition area of the weld metal is 120.0 mm$^2$ or less per layer, the amount of welding heat input is not excessive, the thermal effect on the steel plates is sufficiently small, and a weld metal with excellent low-temperature toughness can be obtained.

The inventors have conducted intensive studies on groove shapes that satisfy the above requirements, that is, that can efficiently obtain a weld metal with excellent low-temperature toughness. As a result, it has been found that in the case of one-side welding, in the case where the gap between the base metals is 6 mm or less and where the groove angle is 20° or less, a weld metal having excellent low-temperature toughness can be obtained with high efficiency. It has been found that in both-side welding, in the case where the gap between the base metals is set to 10 mm or less and where the groove angle is set to 20° or less, a weld metal having excellent low-temperature toughness can be obtained with high efficiency.

However, it has been found that if the gap between the base metals is more than 6 mm, lack of fusion may occur during welding of the first layer, and if the groove angle is less than 4°, lack of fusion and hot cracking are likely to occur during welding. That is, it has been found that the groove shape that can achieve highly efficient and sound welding of steel plates of 50 to 160 mm preferably has a gap between the base metals of 6 mm or less and a groove angle of 4° to 20°, regardless of whether one-side welding or both-side welding is used.

The inventors have conducted studies on the shape of the weld metal when welding is performed on the above-described groove shape, and have found that, in any section perpendicular to the weld line of the weld metal, preferably, the weld metal has three or more layers, and the width W (mm) of the weld metal for each layer excluding the first layer and the outermost surface layer is 5.0 mm or more and 0.4T mm or less. Here, the width W of the first layer is 5.0 mm or less, depending on the gap between the base metals. However, this does not particularly impair the characteristics of the weld metal. In order to make the outermost surface layer more beautiful, repairs may be made to the outermost surface layer. Alternatively, if the toe of a weld has a convex bead, an undercut, or an overlap, repairs may be made to the weld metal or toe of the weld to correct these defects. For these reasons, the first layer and the outermost surface layer of the weld metal are excluded because they are non-steady portions.

[Gist of Present Invention]

The present invention has been completed based on the above-described findings and through further studies, and the gist of the present invention is described below.

[1] A welded joint of steel plates having a plate thickness T (mm) of 50 to 160 mm includes a weld metal including three or more layers, in which the width W (mm) of each layer of the weld metal excluding a first layer and an outermost surface layer is in the range of 5.0 mm or more and 0.4T mm or less.

[2] In the welded joint of steel plates described in [1], the first ratio [A/p] of the sectional area A (mm$^2$) of the weld metal in a direction perpendicular to a weld line to the number of weld layers p (layers) is 120.0 mm$^2$/layer or less, and the second ratio [p/T] of the number of weld layers p to the plate thickness T is 0.40 layers/mm or less.

[3] In the welded joint of steel plates described in [1] or [2], each of the steel plates has a chemical composition containing, by mass%, C: 0.04% to 0.14%, Si: 0.03% to 0.70%, Mn: 0.30% to 2.50%, P: 0.030% or less, S: 0.020% or less, Nb: 0.001% to 0.100%, Al: 0.001% to 0.100%, O: 0.0100% or less, and N: 0.0100% or less, the balance being Fe and incidental impurities, Ceq defined by Expression (1) and the plate thickness (T) satisfy:

$$0.0004T + 0.25 \leq Ceq \leq 0.0004T + 0.45,$$

a dislocation density $\rho$ at a position 1 mm below a surface of each steel plate is $4.0 \times 10^{14}$ m$^{-2}$ or less, an average crystal grain size at the position 1 mm below the surface of each steel plate is 15.0 $\mu$m or less, and an average crystal grain size at the center position of the plate thickness is 20.0 $\mu$m or less,

$$Ceq = [C] + [Mn]/6 + ([Cr] + [Mo] + [V])/5 + ([Cu] + [Ni])/15 \quad (1)$$

where each element symbol in Expression (1) represents the amount of a corresponding element (mass%), and is 0 when the element is not contained.

[4] In the welded joint of steel plates described in [3], the chemical composition of each steel plate further contains, by mass%, one or two or more selected from the group consisting of Cu: 2.000% or less, Ni: 2.500% or less, Cr: 1.500% or less, Mo: 1.000% or less, Ti: 0.100% or less, V: 0.300% or less, B: 0.0100% or less, W: 0.500% or less, Ca: 0.0200% or less, Mg: 0.0200% or less, and REM: 0.0500% or less.

[5] In the welded joint of steel plates described in any one of [1] to [4], the weld metal has a chemical composition containing, by mass%, C: 0.04% to 0.14%, Si: 0.03% to 0.70%, Mn: 0.30% to 2.50%, P: 0.030% or less, S: 0.020% or less, Nb: 0.001% to 0.100%, Al: 0.001% to 0.100%, Cu: 0.001% to 2.000%, Ni: 0.001% to 2.500%, Cr: 0.001% to 1.500%, Mo: 0.001% to 1.000%, Ti: 0.001% to 0.100%, V: 0.001% to 0.300%, B: 0.001% to 0.020%, O: 0.050% or less, and N: 0.010% or less, the balance being Fe and incidental impurities.

[6] In the welded joint of steel plates described in [5], the chemical composition of the weld metal further contains, by mass%, one or two or more selected from the group consisting of W: 0.500% or less, Ca: 0.0200% or less, Mg: 0.0200% or less, and REM: 0.0500% or less.

[7] A method for manufacturing the welded joint of steel plates described in any one of [1] to [6] includes generating arcs from multiple welding electrodes and performing welding by submerged arc welding.

Advantageous Effects of Invention

In the present invention, there is provided a welded joint of steel plates having a plate thickness of 50 to 160 mm, in which the welded joint has a sound weld metal free of welding defects, such as hot cracking and lack of fusion, is a narrow-groove welded joint having both high strength and excellent low-temperature toughness, and has an outstanding industrial effect.

The welded joint of the steel plates of the present invention is not limited to use only for offshore structures and offshore wind power generators, but can also be used for, for example, shipbuilding, line pipes, and construction.

Brief Description of Drawings

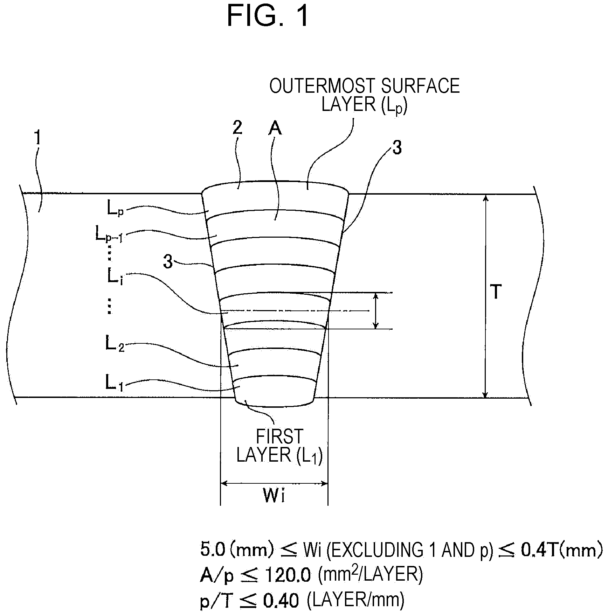

[Fig. 1] Fig. 1 is a schematic sectional view illustrating the shape of the weld metal of a welded joint according to the present invention.

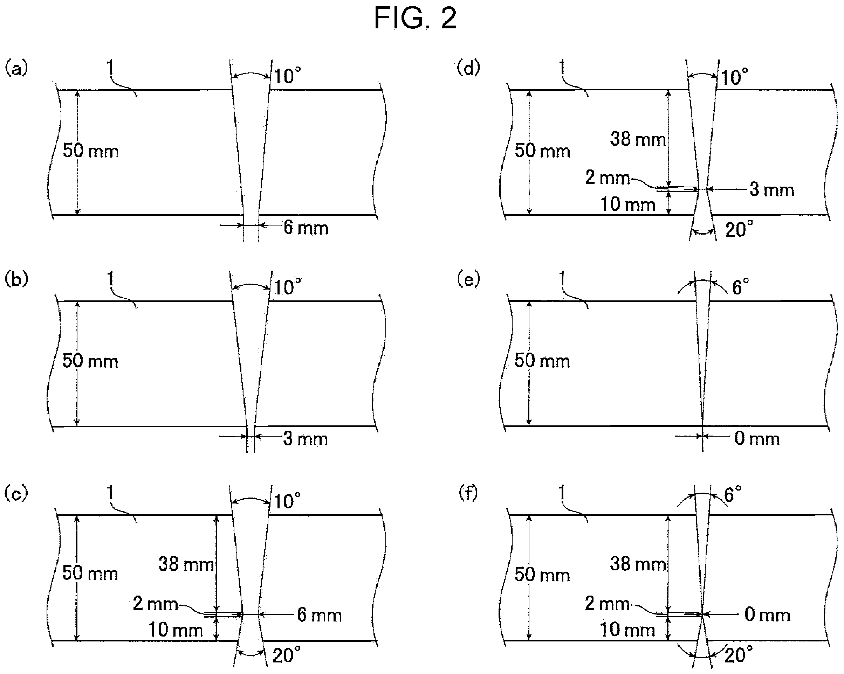

[Fig. 2] Fig. 2 illustrates schematic sectional views for explaining examples of groove shapes of a welded joint according to the present invention when the plate thickness is 50 mm: (a) single V groove, gap = 6 mm, (b) single V groove, gap = 3 mm, (c) double V groove, gap = 6 mm, (d) double V groove, gap = 3 mm, (e) single V groove, gap = 0 mm, and (f) double V groove, gap = 0 mm.

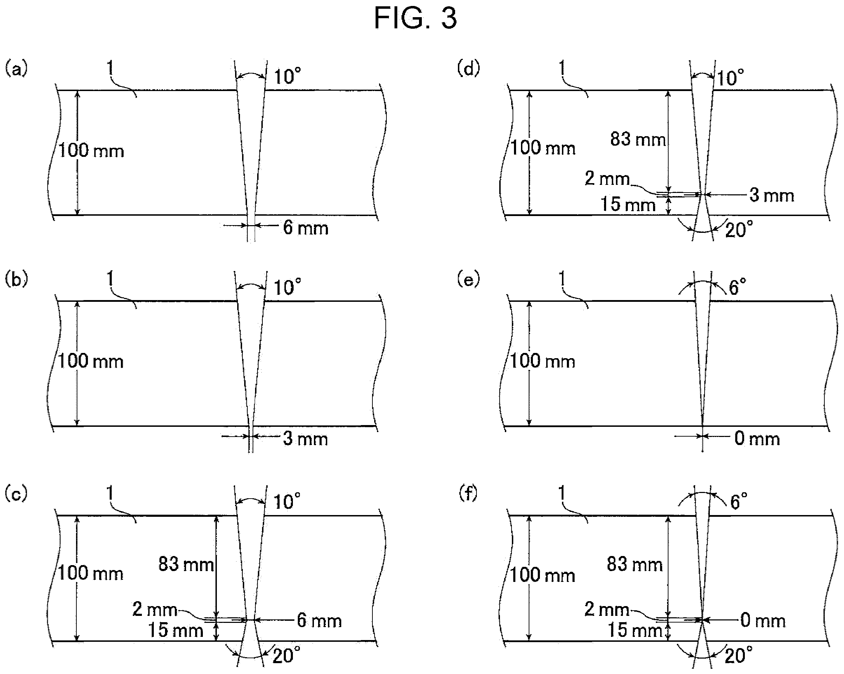

[Fig. 3] Fig. 3 illustrates schematic sectional views for explaining examples of groove shapes of a welded joint according to the present invention when the plate thickness is 100 mm: (a) single V groove, gap = 6 mm, (b) single V groove, gap = 3 mm, (c) double V groove, gap = 6 mm, (d) double V groove, gap = 3 mm, (e) single V groove, gap = 0 mm, and (f) double V groove, gap = 0 mm.

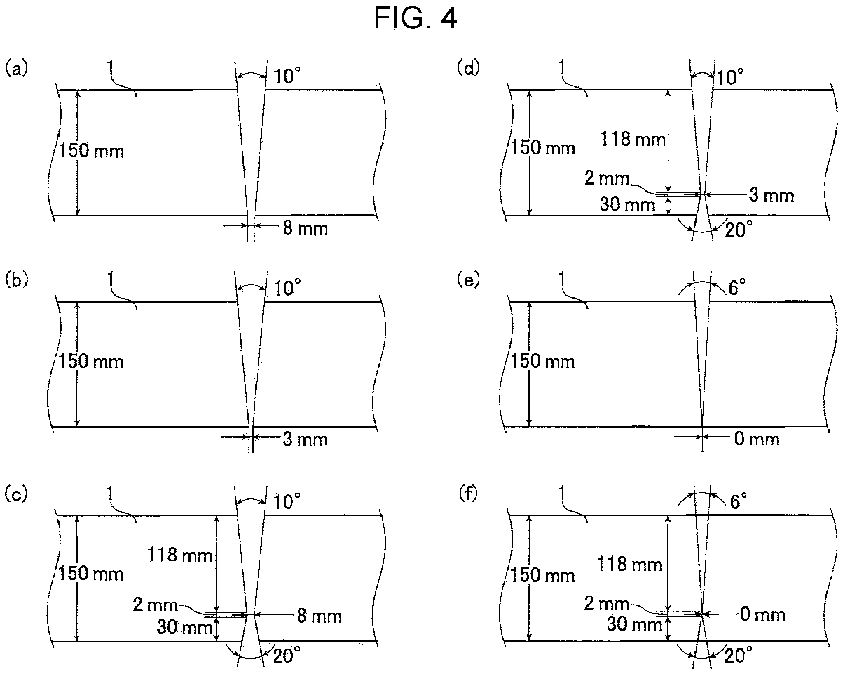

[Fig. 4] Fig. 4 illustrates schematic sectional views for explaining examples of groove shapes of a welded joint according to the present invention when the plate thickness is 150 mm: (a) single V groove, gap = 8 mm, (b) single V groove, gap = 3 mm, (c) double V groove, gap = 8 mm, (d) double V groove, gap = 3 mm, (e) single V groove, gap = 0 mm, and (f) double V groove, gap = 0 mm.

Description of Embodiments

The present invention will be described in detail below. The present invention is not limited to the following embodiments.

[Sectional Shape of Welded Joint]

A welded joint according to the present invention is a butt welded joint of steel plates having a plate thickness T (mm) of 50 to 160 mm, the joint including a weld metal that includes three or more layers, in which the width W (mm) of each layer of the weld metal excluding a first layer and an outermost surface layer is in the range of 5.0 mm or more and 0.4T mm or less.

The first ratio [A/p] of the sectional area A ($mm^2$) of the weld metal in a direction perpendicular to a weld line to the number of weld layers p (layers) is preferably 120.0 $mm^2$/layer or less, and the second ratio [p/T] of the number of weld layers p to the plate thickness T is preferably 0.40 layers/mm or less.

In the present invention, when the groove shape is as described above, sound and highly efficient welding can be performed, not limited to single-pass-per-layer welding.

The sectional shape of the above-described welded joint will be described with reference to Fig. 1.

In the present invention, a weld metal 2, excluding a first layer $L_1$ and an outermost surface layer $L_p$ of the weld metal 2 illustrated in Fig. 1, that is, the weld metal 2 from the layer $L_2$ to the layer $L_{p-1}$, is targeted. As described above, the first layer and the outermost surface weld metal 2 were excluded because they are non-steady portions. For example, as illustrated in Fig. 1, letting the width of the i-th weld layer ($L_i$) be $W_i$, the width $W_i$ represents the width of the weld metal 2 at the center line between the upper portion and the lower portion of each layer, i.e., the distance between fusion lines 3. The width W (mm) of this weld metal 2 is specified to be 5.0 mm or more and 0.4T mm or less. That is, the width W of each of the $L_2$ layer to the $L_{p-1}$ layer, excluding the first layer $L_1$ and the outermost surface layer $L_p$, of the weld metal 2 was determined by sectional macroscopic observation or the like, and each of the values was limited to be in the range of 5.0 mm or more and 0.4T mm or less. If the width W (mm) of the weld metal 2 is less than 5.0 mm, the groove angles when the steel plates 1 are placed before welding are small, and physical interference between the welding wire and the groove walls is likely to occur during welding, resulting in reduced welding efficiency. In addition, a pear-shaped weld bead is more likely to form, thereby significantly increasing the likelihood of the occurrence of hot cracking. Furthermore, the likelihood of lack of fusion is increased. The reason why the upper limit of the width W (mm) of the weld metal 2 is 0.4T mm is that the area of the weld metal 2 is affected by the plate thickness T, and therefore in the present invention, which is intended for the steel plates 1 having a plate thickness of 50 to 160 mm, if the width W is more than 0.4T mm, the area of the weld metal 2 is too large, resulting in a decrease in welding efficiency.

The first ratio [A/p], which is the sectional area per layer when p weld layers from $L_1$ (first layer) to $L_p$ (outermost surface layer) are formed relative to the sectional area A ($mm^2$) of the entire weld metal 2 in a direction perpendicular to the weld line of the weld metal 2, is preferably 120.0 $mm^2$/layer or less. In other words, when the deposition area of the weld metal 2 is 120.0 $mm^2$ or less per layer, the welding heat input is not excessive, the thermal effect on the base metals is sufficiently small, and excellent low-temperature toughness characteristics of the weld metal 2 and the heat-affected zone can be obtained. More preferably, the first ratio [A/p] is 100.0 $mm^2$/layer or less.

The second ratio [p/T] of the number of weld layers p to the plate thickness T is preferably 0.40 layers/mm or less. A second ratio [p/T] greater than 0.40 layers/mm increases the number of welding passes required to produce the welded joint, resulting in a decrease in welding efficiency. Therefore, the control of the second ratio [p/T] to 0.40 layers/mm or less enables high-efficiency welding. More preferably, the second ratio [p/T] is 0.35 layers/mm or less.

[Chemical Composition of Steel Plate]

The steel plates 1 that are the base metals of the welded joint of the present invention will be described. Examples of the steel plates 1 include carbon steel and low-alloy steel. The chemical composition will be described below. Unless otherwise specified, "%" in the chemical composition described below refers to "mass%".

[Basic Composition of Steel Plate]

The basic chemical composition of the steel plates 1 of the welded joint according to the present invention is described below.

The steel plates 1 preferably have a chemical composition containing C: 0.04% to 0.14%, Si: 0.03% to 0.70%, Mn: 0.30% to 2.50%, P: 0.030% or less, S: 0.020% or less, Nb: 0.001% to 0.100%, Al: 0.001% to 0.100%, O: 0.0100% or less, and N: 0.0100% or less, the balance being Fe and incidental impurities.

The reason why the chemical composition of the steel plates 1 in the present invention is specified as above will be described.

[C: 0.04% to 0.14%]

C is an element that can most inexpensively improve the strength of the steel plates 1, and also contributes to the strengthening of austenite grain boundaries. A C content of less than 0.04% reduces the strength of the austenite grain boundaries, causing hot cracking in a slab and resulting in a significant deterioration in manufacturability. In addition, a desired strength of the invention may fail to be provided. A C content of more than 0.14% may lead to a deterioration in the weldability of the steel plate 1, and may also lead to a deterioration in toughness. Thus, the C content is preferably 0.04% to 0.14%. The C content is more preferably 0.05% to 0.12%.

[Si: 0.03% to 0.70%]

Although Si is an element effective for deoxidization, a Si content of less than 0.03% may fail to sufficiently provide the effect. A Si content of more than 0.70% may lead to a deterioration in the weldability of the steel plates 1. Thus, the Si content is preferably 0.03% to 0.70%. The Si content is more preferably 0.04% to 0.60%.

[Mn: 0.30% to 2.50%]

Mn is an element that can improve the hardenability and strength of steel at low cost. In order to provide the effect, the Mn content is preferably 0.30% or more. A Mn content of more than 2.50% may lead to a deterioration in the weldability of the steel plates 1. Thus, the Mn content is preferably 0.30% to 2.50%. The Mn content is more preferably 0.50% to 2.20%.

[P: 0.030% or Less]

P is an element that has a strong effect on the embrittlement of grain boundaries. If a large amount of P is contained, the toughness of the steel plate 1 may be reduced. Thus, the P content is preferably 0.030% or less. The P content is more preferably 0.025% or less. A lower P content is more preferred; thus, the lower limit of the P content is not particularly limited and may be 0%. However, P is an element that is inevitably contained as an impurity in the steel plates 1. If the P content is too low, the refining time and the refining costs will increase. Thus, the P content is preferably 0.001% or more.

[S: 0.020% or Less]

S may reduce the toughness of the steel plates 1; thus, the S content is preferably 0.020% or less. S is more preferably 0.010% or less. A lower S content is more preferred; thus, the lower limit of the S content is not particularly limited and may be 0%. However, S is an element that is inevitably contained as an impurity in the steel plates 1. If the S content is too low, the refining time and the refining costs will increase. Thus, the S content is preferably 0.0001% or more.

[Nb: 0.001% to 0.100%]

Nb is an element that has the effects of inhibiting recrystallization in the form of solute Nb and finely precipitated NbC when strain is applied to the austenite microstructure, and also of shifting the non-recrystallization temperature range to a higher temperature range. In order to provide the effects, the Nb content is preferably 0.001% or more. A Nb content of more than 0.100% may lead to a deterioration in the weldability of the steel plates 1. Thus, the Nb content is preferably 0.001% to 0.100%. The Nb content is more preferably 0.005% to 0.075%. The Nb content is particularly preferably 0.005% to 0.050%.

[Al: 0.001% to 0.100%]

Al is an element that is effective as a deoxidizing agent and also has the effect of forming nitride to reduce the austenite grain size. In order to provide the effects, the Al content is preferably 0.001% or more. An Al content of more than 0.100% may lead to a deterioration in the cleanliness of the steel material and the steel plates 1, thereby leading to reductions in the ductility and toughness of the steel plates 1. Thus, the Al content is preferably 0.001% to 0.100%. The Al content is more preferably 0.005% to 0.080%.

[O: 0.0100% or Less]

O is an element that reduces the ductility and toughness of the steel plates 1; thus, the O content is preferably 0.0100% or less. A smaller O content is more preferred; thus, the lower limit of the O content is not particularly limited and may be 0%. However, O is an element that is inevitably contained in the steel plates 1 as an impurity. If the O content is too low, the refining time and the refining costs will increase. Thus, the O content is preferably 0.0005% or more.

[N: 0.0100% or Less]

N is an element that reduces ductility and toughness; thus, the N content is preferably 0.0100% or less. A smaller N content is more preferred; thus, the lower limit of the N content is not particularly limited and may be 0%. However, N is an element that is inevitably contained in the steel plates 1 as an impurity. Thus, the N content may be more than 0% industrially. If the N content is too low, the refining time and the refining costs will increase. Therefore, the N content is preferably 0.0005% or more.

[Optionally Selected Composition of Steel Plate]

The steel plates 1 of the welded joint of the present invention have the above-described basic composition, and thus the target properties of the present invention can be obtained. For the purpose of further improving the strength and weldability, i.e., the toughness of the weld and the welding workability, the following optionally selected composition is preferably contained in addition to the above-described basic composition, as needed.

The optionally selected composition is, for example, one or two or more selected from the group consisting of Cu: 2.000% or less, Ni: 2.500% or less, Cr: 1.500% or less, Mo: 1.000% or less, Ti: 0.100% or less, V: 0.300% or less, B: 0.0100% or less, W: 0.500% or less, Ca: 0.0200% or less, Mg: 0.0200% or less, and REM: 0.0500% or less.

[Cu: 2.000% or Less]

Cu is an element that can improve the strength of the steel plates 1 without significant deterioration of the toughness of the steel plates 1. A Cu content of more than 2.000% may cause hot cracking due to a Cu-enriched layer formed immediately below scale, leading to a problem. Thus, when Cu is contained, the Cu content is preferably 2.000% or less. More preferably, the Cu content is 0.010% to 1.500%.

[Ni: 2.500% or Less]

Ni is an element that has the effect of enhancing the hardenability of the steel plates 1 and improving the toughness. A Ni content of more than 2.500% may cause a problem of increased production costs. Thus, when Ni is contained, the Ni content is preferably 2.500% or less. More preferably, the Ni content is 0.010% to 2.000%.

[Cr: 1.500% or Less]

Cr is an element that can improve the hardenability of the steel plates 1 to thereby improve the strength of the steel plates 1. The chemical composition of the steel plates 1 more preferably satisfies the following conditions. A Cr content of more than 1.500% may lead to a deterioration in weldability. Thus, when Cr is contained, the Cr content is preferably 1.500% or less. More preferably, the Cr content is 0.010% to 1.200%.

[Mo: 1.000% or Less]

Mo is an element that can improve the hardenability of the steel plates 1 to thereby improve the strength of the steel plates 1. A Mo content of more than 1.000% may lead to a deterioration in weldability. Thus, when Mo is contained, the Mo content is preferably 1.000% or less. More preferably, the Mo content is 0.010% to 0.800%.

[Ti: 0.100% or Less]

Ti is an element that has the effect of pinning the movement of crystal grain boundaries by precipitating in the form of TiN to thereby inhibit grain growth. A Ti content of more than 0.100% may lead to a deterioration in the cleanliness of the microstructure of the steel plates 1, thereby leading to reductions in ductility and toughness. Thus, when Ti is contained, the Ti content is preferably 0.100% or less. More preferably, the Ti content is 0.001% to 0.080%.

[V: 0.300% or Less]

V is an element that can improve the hardenability of the steel plates 1 and can also improve the strength of the steel plates 1 by the formation of carbonitride. A V content of more than 0.300% may lead to a deterioration in weldability. Thus, when V is contained, the V content is preferably 0.300% or less. More preferably, the V content is 0.010% to 0.250%.

[B: 0.0100% or Less]

B is an element that, when added in an extremely small amount, is effective in improving the hardenability of steel, thereby improving the strength of the steel plates 1. A B content of more than 0.0100% may lead to a deterioration in weldability. Thus, when B is contained, the B content is preferably 0.0100% or less. More preferably, the B content is 0.0001% to 0.0070%.

[W: 0.500% or Less]

W is an element that can improve the hardenability of the steel to thereby improve the strength of the steel plates 1. A W content of more than 0.500% may lead to a deterioration in weldability. Thus, when W is contained, the W content is preferably 0.500% or less. More preferably, the W content is 0.010% to 0.400%.

[Ca: 0.0200% or Less]

Ca is an element that forms oxysulfide that is highly stable at high temperatures, thereby improving weldability. A Ca content of more than 0.0200% may lead to a deterioration in the cleanliness, thereby impairing the toughness of the steel plates 1. Thus, when Ca is contained, the Ca content is preferably 0.0200% or less. More preferably, the Ca content is 0.0001% to 0.0180%.

[Mg: 0.0200% or Less]

Mg is an element that forms oxysulfide that is highly stable at high temperatures, thereby improving the weldability of the steel plates 1. A Mg content of more than 0.0200% may result in the saturation of the effect of adding Mg. The effect appropriate to the content may fail to be provided, which may be economically disadvantageous. Thus, when Mg is contained, the Mg content is preferably 0.0200% or less. More preferably, the Mg content is 0.0001% to 0.0180%.

[REM: 0.0500% or Less]

Rare-earth metal (REM) are elements that form oxysulfide that is highly stable at high temperatures, thereby improving the weldability of the steel plates 1. A REM content of more than 0.0500% may result in the saturation of the effect of adding REM. The effect appropriate to the content may fail to be provided, which may be economically disadvantageous. Thus, when REM is contained, the REM content is preferably 0.0500% or less. More preferably, the REM content is 0.0001% to 0.0450%.

[Balance of Composition of Steel Plate]

The balance of the steel plates 1 of the welded joint of the present invention other than the above chemical composition is Fe and incidental impurities. Examples of the incidental impurities include H, Zn, Re, Co, Sb, and Bi, and a total content of 0.0100% or less is acceptable. As long as the basic composition and the optionally selected composition are satisfied, elements other than these may be contained, and such embodiments are also included within the technical scope of the present invention.

[Ceq: Equivalent Carbon Content]

The chemical composition of the steel plates 1 more preferably satisfies the following conditions.
The relationship between Ceq and the plate thickness T (mm) satisfies:

$$0.0004T + 0.25 \leq Ceq \leq 0.0004T + 0.45.$$

Here, Ceq is defined by the following Expression (1) and is an index of hardenability due to the elements contained in steel.

$$Ceq = [C] + [Mn]/6 + ([Cr] + [Mo] + [V])/5 + ([Cu] + [Ni])/15 \tag{1}$$

where each element symbol in Expression (1) represents the amount of a corresponding element (mass%), and is 0 when the element is not contained.
In the present invention, in order to obtain a desired high-strength microstructure, it is necessary to control the cooling rate in accordance with the plate thickness T of the steel plates 1 and the amount of alloy added in accordance with the plate thickness T. A Ceq of less than (0.0004T + 0.25) results in failure to achieve the required strength of the steel plates 1. A Ceq of more than (0.0004T + 0.45) causes the strength to be too high at the surfaces of the steel plates 1, where the cooling rate is higher than at the center position of the plate thickness of the steel plates 1. This results in reduced low-temperature toughness at the surfaces of the steel plates 1. Therefore, preferably,

$$0.0004T + 0.25 \leq Ceq \leq 0.0004T + 0.45.$$

More preferably, $0.0004T + 0.27 \leq Ceq \leq 0.0004T + 0.43$.

[Chemical Composition of Weld Metal]

The chemical composition of the weld metal 2 of the welded joint of the present invention will be described. Unless otherwise specified, "%" regarding the chemical composition refers to "mass%".

[Basic Composition of Weld Metal]

The basic chemical composition of the weld metal 2 of the welded joint according to the present invention is described below.

The weld metal 2 preferably has a chemical composition containing C: 0.04% to 0.14%, Si: 0.03% to 0.70%, Mn: 0.30% to 2.50%, P: 0.030% or less, S: 0.020% or less, Nb: 0.001% to 0.100%, Al: 0.001% to 0.100%, Cu: 0.001% to 2.000%, Ni: 0.001% to 2.500%, Cr: 0.001% to 1.500%, Mo: 0.001% to 1.000%, Ti: 0.001% to 0.100%, V: 0.001% to 0.300%, B: 0.001% to 0.020%, O: 0.050% or less, and N: 0.010% or less, the balance being Fe and incidental impurities.

The reason why the chemical composition of the weld metal 2 in the present invention is specified as above will be described.

Each composition can be added (incorporated) to the weld metal 2 from any of the steel plates 1, the flux, or the wire, which is a welding material.

[C: 0.04% to 0.14%]

C is an element that has the effect of increasing the strength of the weld metal 2 through solid solution strengthening, and is also an element that contributes to strengthening the austenite grain boundaries. A C content of less than 0.04% may reduce the strength of the austenite grain boundaries, thereby failing to achieve the target strength of the present invention. A C content of more than 0.14% may promote the occurrence of weld cracking, and may also reduce the low-temperature toughness of the weld metal 2. Thus, the C content is preferably 0.04% to 0.14%. More preferably, the C content is 0.05% to 0.12%.

[Si: 0.03% to 0.70%]

Si acts as a deoxidizing agent and has the effect of increasing the viscosity of the weld metal 2 and stably maintaining the shape of the weld bead. In order to provide such hardening, the Si content is preferably 0.03% or more. However, a Si content of more than 0.70% may reduce the low-temperature toughness of the weld metal 2. Furthermore, silicon may be segregated during solidification to form liquid phases at interfaces of solidified cells, thereby causing a deterioration in weld cracking resistance. Thus, the Si content is preferably 0.03% to 0.70%. More preferably, the Si content is 0.04% to 0.60%.

[Mn: 0.30% to 2.50%]

Mn is an element that can improve the hardenability and strength of the weld metal 2 at low cost. In order to obtain the effects, the Mn is preferably contained in an amount of 0.30% or more. A Mn content of more than 2.50% may cause Mn to segregate during solidification, thereby inducing hot cracking and reducing the weldability of the steel plates 1. Thus, the Mn content is preferably 0.30% to 2.50%. More preferably, the Mn content is 0.50% to 2.20%.

[P: 0.030% or Less]

P is an element that has a strong effect on the embrittlement of grain boundaries. If a large amount of P is contained, P may reduce the low-temperature toughness of the weld metal 2, and may segregate at interfaces during solidification to thereby induce hot cracking. Thus, the P content is preferably 0.030% or less. More preferably, the P content is 0.025% or less. A lower P content is more preferred; thus, the lower limit of the P content is not particularly limited and may be 0%. However, P is an element that is inevitably contained in the weld metal 2 as an impurity. If the P content is too low, the refining time and the refining costs may increase. Thus, the P content is preferably 0.001% or more.

[S: 0.020% or Less]

S may reduce the low-temperature toughness of the weld metal 2 and may segregate at interfaces during solidification to thereby induce hot cracking. Thus, the S content is preferably 0.020% or less. More preferably, the S content is 0.010% or less. A smaller S content is more preferred; thus, the lower limit of the S content is not particularly limited and may be 0%. However, S is an element that is inevitably contained in the weld metal 2 as an impurity. If the S content is too low, the refining time and the refining costs may increase. Thus, the S content is preferably 0.0001% or more.

[Nb: 0.001% to 0.100%]

Nb is a carbide-forming element and precipitates in the form of carbide to contribute to improving the strength of the weld metal 2. Nb precipitates in the form of carbide at interfaces of solidified cells of the weld metal 2, thereby contributing to inhibiting the occurrence of hot cracking. In order to obtain the effects, the Nb content is preferably 0.001% or more. A Nb content of more than 0.100% may cause the carbide to coarsen. The coarse carbide may act as the starting point of fracture, thereby reducing the toughness at extremely low temperatures. Thus, the Nb content is preferably 0.001% to 0.100%. More preferably, the Nb content is 0.005% to 0.075%. Particularly preferably, the Nb content is 0.005% to 0.050%.

[Al: 0.001% to 0.100%]

Al acts as a deoxidizing agent, increases the viscosity of a molten metal, and has an important effect of stably maintaining the shape of the weld bead. In order to obtain the effects, the Al content is preferably 0.001% or more. An Al content of more than 0.100% may lead to a deterioration in the cleanliness of the weld metal 2, thereby reducing the ductility and the toughness of the weld metal 2. A reduction in ductility increases the likelihood of ductility-dip cracking, which is a type of hot cracking, during welding. Furthermore, the viscosity of the weld metal 2 may be too high; thus, the weld bead may fail to spread, increasing defects, such as lack of fusion. Thus, the Al content is preferably 0.001% to 0.100%. More preferably, the Al content is 0.005% to 0.080%.

[Cu: 0.001% to 2.000%]

Cu is an element that can improve the strength of the weld metal 2 without significantly deteriorating the toughness of the weld metal 2. In order to obtain the effect, the Cu content is preferably 0.001% or more. If a large amount Cu is contained and the Cu content is more than 2.000%, Cu may segregate during solidification, causing hot cracking. Thus, when Cu is contained, the Cu content is preferably 2.000% or less. More preferably, the Cu content is 0.005% to 1.500%.

[Ni: 0.001% to 2.500%]

Ni is an element that has the effect of enhancing the hardenability of the weld metal 2 and improving the toughness. In order to obtain the effects, the Ni content is preferably 0.001% or more. However, Ni is an expensive element; thus, a Ni content of more than 2.500% may be economically disadvantageous. Therefore, when Ni is contained, the Ni content is preferably 2.500% or less. More preferably, the Ni content is 0.010% to 2.000%.

[Cr: 0.001% to 1.500%]

Cr is an element that can improve the hardenability of the weld metal 2 to thereby improve the strength of the weld metal 2. In order to obtain the effects, the Cr content is preferably 0.001% or more. A Cr content of more than 1.500% may lead to a deterioration in weldability. Furthermore, Cr carbide may be formed, thereby leading to a decrease in low-temperature toughness. Therefore, when Cr is contained, the Cr content is preferably 1.500% or less. More preferably, the Cr content is 0.010% to 1.200%.

[Mo: 0.001% to 1.000%]

Mo is an element that can improve the hardenability of the weld metal 2 to thereby improve the strength of the weld metal 2. In order to obtain the effects, the Mo content is preferably 0.001% or more. A Mo content of more than 1.000% may lead to a deterioration in weldability. Thus, when Mo is contained, the Mo content is preferably 1.000% or less. More preferably, the Mo content is 0.010% to 0.800%.

[Ti: 0.001% to 0.100%]

Ti is an element that can precipitate in the form of fine carbonitride in the weld metal 2 to thereby improve the strength of the weld metal 2. In order to obtain the effects, the Ti content is preferably 0.001% or more. A Ti content of more than 0.100% may result in a deterioration in the cleanliness of the microstructure of the weld metal 2, thereby leading to deteriorations in ductility and toughness. Thus, when Ti is contained, the Ti content is preferably 0.100% or less. More preferably, the Ti content is 0.005% to 0.080%.

[V: 0.001 to 0.300%]

V is an element that can improve the hardenability of the weld metal 2 and can also improve the strength of the weld metal 2 by the formation of carbonitride. In order to obtain the effects, the V content is preferably 0.001% or more. A V content of more than 0.300% may lead to a deterioration in weldability. Thus, when V is contained, the V content is preferably 0.300% or less. More preferably, the V content is 0.005% to 0.250%.

[B: 0.001% to 0.020%]

B is an element that, when added in a very small amount, is effective in improving hardenability, thereby improving the strength of the weld metal 2. In order to obtain the effects, the B content is preferably 0.001% or more. A B content of more than 0.020% may lead to a deterioration in weldability. Thus, when B is contained, the B content is preferably 0.020% or less. More preferably, the B content is 0.005% to 0.018%.

[O: 0.050% or Less]

O is an element that reduces the ductility and toughness of the weld metal 2; thus, the O content is preferably 0.050% or less. A lower O content is more preferred; thus, the lower limit of the O content is not particularly limited and may be 0%. However, O is an element that is inevitably contained in the weld metal 2 as an impurity. If the O content is too low, the refining time and the refining costs will increase. Thus, the O content is preferably 0.0005% or more.

[N: 0.010% or Less]

N is an element that reduces the ductility and toughness of the weld metal 2; thus, the N content is preferably 0.010% or less. A smaller N content is more preferred; thus, the lower limit of the N content is not particularly limited and may be 0%. However, N is an element that is inevitably contained in the weld metal 2 as an impurity. Thus, the N content may be more than 0% industrially. If the N content is too low, the refining time and the refining costs may increase. Therefore, the N content is preferably 0.0005% or more.

[Optionally Selected Composition of Weld Metal]

The weld metal 2 of the present invention has the above-described basic composition, and thus the target properties of the present invention can be obtained. For the purpose of further improving the strength and weldability, i.e., the toughness of the weld and the welding workability, the following optionally selected composition is preferably contained in addition to the above-described basic composition, as needed.

One or two or more elements selected from the group consisting of W: 0.500% or less, Ca: 0.0200% or less, Mg: 0.0200% or less, and REM: 0.0500% or less.

[W: 0.500% or Less]

W is an element that can improve the hardenability of the weld metal 2 to thereby improve the strength of the weld metal 2. A W content of more than 0.500% may lead to a deterioration in weldability. Thus, when W is contained, the W content is preferably 0.500% or less. More preferably, the W content is 0.010% to 0.400%.

[Ca: 0.0200% or Less]

Ca is an element that forms oxysulfide that is highly stable at high temperatures, thereby improving the weldability of the weld metal 2. A Ca content of more than 0.0200% may lead to a deterioration in cleanliness, thereby impairing the toughness of the weld metal 2. Thus, when Ca is contained, the Ca content is preferably 0.0200% or less. Thus, when Ca is contained, the Ca content is preferably 0.0200% or less. More preferably, the Ca content is 0.0001% to 0.0180%.

[Mg: 0.0200% or Less]

Mg is an element that forms oxysulfide that is highly stable at high temperatures, thereby improving the weldability of the weld metal 2. A Mg content of more than 0.0200% may result in the saturation of the effect of adding Mg. The effect appropriate to the content may fail to be provided, which may be economically disadvantageous. Thus, when Mg is contained, the Mg content is preferably 0.0200% or less. More preferably, the Mg content is 0.0001% to 0.0180%.

[REM: 0.0500% or Less]

Rare-earth metal (REM) is an element that forms oxysulfide that is highly stable at high temperatures, thereby improving the weldability of the weld metal 2. A REM content of more than 0.0500% may result in the saturation of the effect of adding REM. The effect appropriate to the content may fail to be provided, which may be economically disadvantageous. Thus, when REM is contained, the REM content is preferably 0.0500% or less. More preferably, the REM content is 0.0001% to 0.0450%.

[Balance of Composition of Weld Metal]

In the chemical composition of the weld metal 2 of the present invention, the chemical composition other than the above-described chemical composition, that is, the balance, is Fe and incidental impurities. The incidental impurities refer to components that enter the weld metal 2 during the welding process from welding wire, flux, the steel plates 1, the surrounding atmosphere, and so forth, and are not components intentionally incorporated into the weld metal 2. Examples of the incidental impurities include H, Zn, Re, Co, Sb, and Bi, and a total content of 0.0100% or less is acceptable. As long as the basic composition and the optionally selected composition are satisfied, elements other than these may be contained, and such embodiments are also included within the technical scope of the present invention.

[Characteristics of Steel Plate]

The characteristics of the steel plates 1 of the welded joint according to the present invention will be described. The dislocation density $\rho$ (m$^{-2}$) at a position 1 mm below a surface of each of the steel plates 1 is preferably $4.0 \times 10^{14}$ m$^{-2}$ or less. The dislocation density $\rho$ (m$^{-2}$) refers to the length of dislocation per unit volume in a metal crystal. The position 1 mm below a surface of each steel plate 1 is specified from the viewpoint of bending workability of the steel plate 1. The bending workability of the steel plate 1 is determined by the ductility of the microstructure of the surface layer of the steel plate 1. When the dislocation density of the microstructure of the surface layer increases due to working strain during hot rolling, the deformation limit of the microstructure of the surface layer decreases, thus impairing the bending workability. Thus, the dislocation density at the position 1 mm below the surface of the steel plate 1 is $4.0 \times 10^{14}$ m$^{-2}$ or less. Usually, steel microstructures inevitably contain dislocations. Thus, reducing the dislocation density to less than $1.0 \times 10^{11}$ m$^{-2}$ requires extremely high manufacturing costs. Accordingly, the dislocation density is preferably $1.0 \times 10^{11}$ m$^{-2}$ or more, more preferably $3.0 \times 10^{14}$ m$^{-2}$ or less.

Preferably, the average crystal grain size at the position 1 mm below the surface of each steel plate 1 is 15.0 $\mu$m or less, and the average crystal grain size at the center position of the plate thickness of each steel plate 1 is 20.0 $\mu$m or less.

The term "average crystal grain size" refers to the average of the grain sizes of all crystal grains each at the position 1 mm below the surface of each steel plate 1 and at the center position of the plate thickness, when a crystal grain is defined as a region surrounded by a boundary with a misorientation of 15° or more. The average crystal grain size can be measured by a method described later in Examples. The toughness of the surface layer of the steel plate 1 is improved as the crystal grain size of the microstructure of the surface layer of the steel plate 1 decreases. In order to obtain the effect, the average crystal grain size at the position 1 mm below the surface of the steel plate 1 needs to be 15.0 $\mu$m or less. For this reason, the average crystal grain size at the position 1 mm below the surface of the steel plate 1 is 15.0 $\mu$m or less. More preferably, the average crystal grain size is 13.0 $\mu$m or less. The toughness at the center position of the thickness of each steel plate 1 is improved as the crystal grain size in the steel microstructure at the center position of the plate thickness of the steel plate 1 decreases. In order to obtain the effect, the average crystal grain size at the center position in the plate thickness of the steel plate 1 needs to be 20.0 $\mu$m or less. For this reason, the average crystal grain size at the center position of the plate thickness of the steel plate 1 is 20.0 $\mu$m or less. More preferably, the average crystal grain size is 15.0 $\mu$m or less. In the present invention, the phrase "1 mm below the surface of the steel plate" refers to a depth position of 1 mm from the surface of the steel plate 1 in the plate thickness direction. The "center position of the plate thickness" indicates the position at 1/2 of the plate thickness of the steel plate 1.

[Method for Manufacturing Steel Plate]

A method for manufacturing the steel plates 1 will be described below. Each of the steel plates 1 of the present invention is manufactured by heating a slab (steel material) having the above-described chemical composition, performing hot rolling, and performing cooling. After the cooling, the steel plate 1 of the present invention may be further subjected to optional tempering treatment. In the method for manufacturing the steel plates 1 of the present invention, various preferred conditions will be described below. However, the method for manufacturing the steel plates 1 of the present invention is not limited to the manufacturing method described below, and it is sufficient that the method has the characteristics described below.

In the following description of the manufacturing method, the temperature indicated in "°C" refers to the surface temperature of the slab or the steel plates 1 unless otherwise specified. The surface temperature can be measured, for example, with a radiation thermometer.

In the present invention, a method for making a slab is not particularly limited, any known method for making a slab using a furnace, such as a converter, an electric arc furnace, or a vacuum melting furnace, may be employed. The slab is produced to desired dimensions, for example by a continuous casting process. The molten steel may further be subjected to secondary refining, such as ladle refining.

As mentioned above, the produced slab is preferably heated to a temperature of 1,000°C to 1,200°C. If the heating temperature of the slab is lower than 1,000°C, coarse NbC precipitated inside the slab during slab casting will not redissolve and will remain. Thus, the effect of reducing the non-recrystallization temperature range due to the solute Nb and fine NbC that reprecipitates during hot rolling is not provided. Accordingly, a refining effect of controlled rolling on crystal grains is reduced, thereby impairing the toughness of the steel plate 1, which is the final product. When the heating temperature of the slab is higher than 1,200°C, the grain size at the start of hot rolling is large due to the grain growth of austenite. Thus, the crystal grain size of the final microstructure after hot rolling is also large, thereby impairing the toughness of the steel plate 1. Therefore, the heating temperature of the slab is preferably a temperature of 1,000°C to 1,200°C. More preferably, the heating temperature of the slab is 1,030°C or higher, still more preferably, 1,170°C or lower.

The heated slab is then preferably hot rolled. As described above, in the present invention, the dislocation density and average crystal grain size at the position 1 mm below the surface of the steel plate 1, and the average crystal grain size at the center position of the plate thickness of the steel plate 1 are important. In order to obtain various characteristics, the slab is preferably rolled under the following hot rolling conditions.

In this specification, a temperature range of higher than (8250[Nb] + 770°C) at the position 1 mm below the surface of the steel plate 1 or at the center position of the plate thickness is referred to as a recrystallization temperature range. A temperature range of (8250[Nb] + 770°C) to the $Ar_3$ temperature at the position 1 mm below the surface of the steel plate 1 or at the center position of the plate thickness is referred to as the non-recrystallization temperature range. The temperature at the center position of the plate thickness of the steel plate 1 can be determined, for example, by attaching a thermocouple to the center of the plate thickness and performing measurement, or by calculating the temperature distribution within the section of the steel plate 1 by heat transfer analysis and correcting the result using the surface temperature of the steel plate 1. The above-described [Nb] represents the amount of the corresponding element contained (mass%).

The temperature at the position 1 mm below the surface of the steel plate 1 is once reduced to the $Ar_3$ temperature or lower, and then brought to higher than the $Ac_3$ temperature by recuperation. Next, when the temperature of the steel plate 1 at the position 1 mm below the surface is in the temperature range of (8250[Nb] + 770°C) to the $Ar_3$ temperature, the steel plate 1 is subjected to rolling reduction with a rolling reduction ratio of 25% or more. Thereafter, when the temperature at the position 1 mm below the surface of the steel plate 1 is in a temperature range lower than the $Ar_3$ temperature, the steel plate 1 is subjected to rolling reduction with a total rolling reduction ratio of 15% or less.

During hot rolling of the heated slab, the surface layer of the steel plate 1 is once cooled to the $Ar_3$ temperature or lower, thereby transforming austenite into a low-temperature-formed microstructure, such as ferrite. Furthermore, the surface layer of the steel plate 1 is then brought to the $Ac_3$ temperature or higher by recuperation, the surface layer of the steel plate 1 is retransformed to an austenite microstructure, thereby resulting in fine austenite of the surface layer of the steel plate 1.

The cooling of the steel plate 1 described above is performed by a method, such as water cooling or air cooling. The method is not limited as long as it can be controlled to a predetermined temperature. For example, cooling to the $Ar_3$ temperature or lower is performed by water cooling. The residence time during which the temperature at the position 1 mm below the surface of the steel plate 1 is the $Ar_3$ temperature or lower is preferably 5 seconds or more, and preferably 300 seconds or less. The recuperation after cooling is performed by holding the steel plate 1 in air. The holding time is preferably 30 seconds or more, and preferably 600 seconds or less.

The steel plate 1 is then subjected to rolling reduction at a rolling reduction ratio of 25% or more in a temperature range in which the surface layer of the steel plate 1 is in the non-recrystallization temperature range of (8250[Nb] + 770°C) to the $Ar_3$ temperature, thereby introducing working strain into austenite of the surface layer of the steel plate 1. This acts as a transformation nucleus during final cooling, resulting in a fine microstructure with good toughness. Preferably, the rolling reduction ratio in the above-described temperature range is 30% or more. From the viewpoint of rolling efficiency, the rolling reduction ratio in this temperature range is preferably 80% or less, more preferably 70% or less.

The upper limit of the number of passes of rolling reduction in this temperature range is not particularly limited. The above-described requirements for the rolling reduction ratio only need to be satisfied. For example, the process may be carried out in multiple passes.

[Rolling Conditions]

When the total rolling reduction ratio is more than 15% in a temperature range in which the temperature of the surface layer of the steel plate 1 is lower than the $Ar_3$ temperature, working strain is introduced into the ferrite microstructure and the pearlite microstructure completely transformed in the surface layer of the steel plate 1. This reduces the ductility of the steel plate 1, thereby impairing the bending workability of the steel plate 1. Therefore, the total rolling reduction ratio in a temperature range in which the temperature of the surface layer of the steel plate 1 is lower than the $Ar_3$ temperature is 15% or less. Preferably, the total rolling reduction ratio in the above-described temperature range is 6% or less.

When these microstructure controls are performed under the rolling conditions of the surface layer of the steel plate 1 described above, the surface layer of the steel plate 1 can have a microstructure with a low dislocation density, a small crystal grain size, and excellent bending workability and toughness.

Next, the steel plate 1 is preferably subjected to rolling reduction at a total rolling reduction ratio of 25% or more in a temperature range in which the temperature at the center position of the plate thickness of the steel plate 1 is (8250[Nb] + 770°C) or lower and the $Ar_3$ temperature or higher.

This introduces working strain into the austenite at the center position of the plate thickness of the steel plate 1. This acts as a transformation nucleus during final cooling, resulting in a fine microstructure with good toughness. Therefore, the total rolling reduction ratio for the steel plate 1 in a temperature range in which the temperature at the center position of the plate thickness of the steel plate 1 is (8250[Nb] + 770°C) or lower is preferably 25% or more. More preferably, the total rolling reduction ratio for the steel plate 1 is 35% or more. From the viewpoint of rolling efficiency, the total rolling reduction ratio of the steel plate 1 in this temperature range is preferably 70% or less, more preferably 67% or less.

If the center position of the plate thickness of the steel plate 1 is lower than the $Ar_3$ temperature, working strain will be introduced into the generated ferrite, thereby reducing the toughness of the steel plate 1. Therefore, the temperature at the center position of the plate thickness of the steel plate 1 is preferably the $Ar_3$ temperature or higher.

In the present invention, the temperature ranges for the above-described rolling conditions may overlap between the two types of rolling: "rolling applied to the surface layer of the steel plate" and "rolling applied to the center position of the plate thickness". In this case, the rolling reduction in the overlapping temperature range is accumulated as the rolling reduction for both the "surface layer of the steel plate" and the "center position of the plate thickness", and it is sufficient if the accumulated rolling reduction falls within the respective rolling condition ranges.

The total rolling reduction ratio in the recrystallization temperature range at the surface layer of the steel plate 1 and at the center position of the plate thickness is calculated, in a temperature range higher than (8250[Nb] + 770°C), using the following formula: Total rolling reduction ratio = (r0 - r1)/r0 × 100 (%). Here, r0 is the plate thickness of the slab when the first rolling is started, and r1 is the plate thickness of the steel plate 1 after the final rolling is performed. The $Ar_3$ temperature and the $Ac_3$ temperature can be determined by a Formastor test or the like.

[Cooling Conditions and Tempering Conditions]

The steel plate 1 produced by the above-described hot rolling of the slab is cooled. Specifically, letting the plate thickness of the steel plate 1 be t [mm], the steel plate 1 is cooled in such a manner that the average cooling rate of the steel plate 1 is $2,500 \times t^{-1.7}$ °C/s or more when the temperature at the center position of the plate thickness of the steel plate 1 is in the temperature range of 700°C to 550°C. An example of a cooling method is water cooling, in which water is sprayed from a nozzle at a high flow rate. In the present invention, a cooling operation (treatment) is preferably performed on both sides of the steel plate 1 in such a manner that both sides of the steel plate 1 are cooled under the same conditions.

If the average cooling rate of the steel plate 1 is less than $2,500 \times t^{-1.7}$ °C/s when the temperature at the center position of the plate thickness of the steel plate 1 after hot rolling of the slab is 700°C to 550°C, the cooling rate will be insufficient in the temperature range where transformation from austenite to a low-temperature transformation microstructure occurs. This may result in failure to achieve the required strength of the steel plate 1 targeted in the present invention. In addition, coarse ferrite is formed, resulting in a possible deterioration in the toughness of the steel plate 1. Therefore, when the temperature at the center position of the plate thickness of the steel plate 1 is in the temperature range of 700°C to 550°C, the average cooling rate of the steel plate 1 is preferably $2,500 \times t^{-1.7}$ °C/s or more.

In the present invention, after the steel plate 1 is cooled, the steel plate 1 may be subjected to tempering as necessary in order to further improve the strength and toughness of the steel plate 1. In this case, the steel plate 1 is tempered at a tempering temperature of 650°C or lower after cooling the steel plate. A tempering temperature higher than 650°C may result in significant softening of the steel plate 1, and therefore may fail to provide the required strength of the steel plate 1. For this reason, the tempering temperature is preferably 650°C or lower. The lower limit of the tempering temperature is not particularly limited, but is preferably 200°C or higher. The tempering time can be adjusted appropriately. The tempering temperature used here refers to the temperature of the surface of the steel plate 1.

[Mechanical Properties of Weld Metal]

Preferred mechanical properties of the welded joint according to the present invention will be described. In the weld metal 2 having the above-described chemical composition and produced in accordance with the provisions of JIS Z 3111:2005, the weld metal 2 preferably has a yield strength (0.2% proof stress) of 325 MPa or more and a tensile strength of 520 MPa or more in a tensile test at room temperature. The tensile strength of the welded joint at room temperature is preferably 520 MPa or more.

The absorbed energy ($_vE_{-40}$) of a V-notch Charpy impact test at a test temperature of -40°C for the weld metal 2 and heat-affected zone of the welded joint produced in accordance with the provisions of JIS Z 3128:2017 is preferably 30 J or more. This is because absorbed energy less than 30 J may reduce the toughness of a structure including this welded joint and make it more susceptible to fracture.

[Method for Manufacturing Welded Joint]

A method for manufacturing the welded joint according to the present invention will be described below. The steel plates 1 having a plate thickness of 50 to 160 mm and preferably having the above-described chemical composition are prepared. The prepared steel plates 1 are subjected to edge preparation in such a manner that the steel plates 1 form a predetermined groove shape. The groove shape formed on the steel plates 1 does not need to be particularly limited. Examples thereof include a single V groove, a single bevel groove, a double V groove, and a double bevel groove, which are commonly used for welded structures.

Next, the grooved steel plates that have been subjected to edge preparation are welded together to form a multilayer weld metal 2 of three or more layers, thereby forming a welded joint. If the steel plates 1 are welded together so as to form the weld metal 2 formed of one or two layers, the heat generated during welding may fail to be uniformly distributed in the groove, thereby potentially inducing welding defects. The number of passes per layer is not particularly limited, and may be two or more passes, not limited to a single pass. However, the welding efficiency significantly deteriorates if the number of passes is more than four, four passes or less is preferred. From the viewpoint of welding efficiency, two passes are more preferred.

Any welding material can be used for welding the steel plates 1 as long as it can form the weld metal 2 with the desired characteristics. Specifically, the types of welding wires, filler rods, and welding fluxes are not restricted.

Examples of a welding method include submerged arc welding and gas metal arc welding (also called gas shielded arc welding). Commonly, submerged arc welding is preferably used because high-efficiency welding can be performed. More preferably, multi-electrode submerged arc welding is used, which is a more efficient welding method. Still more preferably, the welding method is performed using a submerged arc welding machine having two electrodes. In this two-electrode submerged arc welding, a first electrode (leading electrode) generates an arc from one wire passing through a torch, and the second electrode (trailing electrode) generates arcs from two wires passing through a single torch, thereby performing submerged arc welding. The arc generated from the wire tip of the first electrode melts the bottom portion of the groove, thereby inhibiting lack of fusion. At the second electrode, the arcs are simultaneously generated from the two wires, and the mutual arcs accelerate the melting of the wires, thereby increasing the amount of deposited metal. For this reason, a more efficient welding can be performed.

The preferred welding conditions for two-electrode submerged arc welding are as follows: for the first electrode, a current of 600 to 1,200 A and a voltage of 24 to 45 V; and for the second electrode, a current of 450 to 1,200 A and a voltage of 30 to 48 V. Preferably, the welding speed is 50 to 130 cm/min, and the heat input is 10 to 100 kJ/cm. Each of the electrodes described above corresponds to a welding electrode in the embodiment.

The compositions of the welding wire and welding flux used in two-electrode submerged arc welding are adjusted, taking into account base metal dilution, so as to form the weld metal 2 having the composition described above. It should be noted that it is sufficient for weld metal 2 to fall within the above-described composition range, and the types of welding wire and welding flux are not particularly limited.

The welding wire may be a solid wire or a flux-cored wire containing flux for wire inside the wire. In the present invention, any welding wire can be used. When the flux-cored wire is used, the wire is produced in such a manner that the total of the chemical compositions of the steel sheath, the metal powder, and the flux powder for the wire, which are to be used, will be the target chemical composition of the welding material.

Examples of the welding flux include a fused flux and a sintered flux. In the present invention, any welding flux may be used.

EXAMPLES

The present invention will be further described below based on Examples. However, the following examples are merely intended to illustrate and explain the present invention in more detail, and are not intended to limit the scope of the present invention.

Molten steels having chemical compositions given in Table 1 were made by steelmaking, and steel materials (slabs) were produced by, for example, continuous casting. The compositions given in Table 1 are the chemical compositions of steel plates. In Table 1, the "-" cell indicates that the component in the column where "-" is marked is not intentionally added to the molten steel. This includes not only the case where the component is not contained in the molten steel (0%), but also the case where the component is unavoidably contained in the molten steel.

[Table 1]

| Steel type of steel plate | Chemical composition (mass%) *1 | | | | | | | | | | | | | | | | | | | | Ceq. |
|---|---|---|---|---|---|---|---|---|---|---|---|---|---|---|---|---|---|---|---|---|---|
| | C | Si | Mn | P | S | Nb | Al | O | N | Cu | Ni | Cr | Mo | Ti | V | B | W | Ca | Mg | REM | |
| A | 0.09 | 0.27 | 1.58 | 0.017 | 0.010 | 0.031 | 0.072 | 0.0058 | 0.0039 | - | - | - | - | - | - | - | - | - | - | - | 0.36 |
| B | 0.06 | 0.46 | 1.80 | 0.015 | 0.009 | 0.076 | 0.034 | 0.0077 | 0.0035 | - | - | - | - | - | - | - | - | - | - | - | 0.36 |
| C | 0.10 | 0.29 | 1.48 | 0.010 | 0.012 | 0.074 | 0.070 | 0.0042 | 0.0052 | - | - | - | - | - | - | - | - | - | - | - | 0.35 |
| D | 0.12 | 0.43 | 1.12 | 0.010 | 0.007 | 0.048 | 0.087 | 0.0037 | 0.0044 | - | - | - | - | - | - | - | - | - | - | - | 0.30 |
| E | 0.10 | 0.50 | 1.70 | 0.008 | 0.011 | 0.021 | 0.029 | 0.0048 | 0.0077 | - | - | - | - | - | - | - | - | - | - | - | 0.39 |
| F | 0.07 | 0.47 | 1.72 | 0.011 | 0.021 | 0.042 | 0.044 | 0.0036 | 0.0005 | - | - | - | - | - | - | - | - | - | - | - | 0.36 |
| G | 0.07 | 0.45 | 2.09 | 0.020 | 0.006 | 0.057 | 0.050 | 0.0074 | 0.0051 | 1.007 | - | - | - | - | - | - | - | - | - | - | 0.48 |
| H | 0.15 | 0.47 | 1.10 | 0.018 | 0.004 | 0.049 | 0.037 | 0.0063 | 0.0029 | - | 1.291 | - | - | - | - | - | - | - | - | - | 0.42 |
| I | 0.08 | 0.34 | 0.93 | 0.016 | 0.014 | 0.055 | 0.068 | 0.0039 | 0.0051 | - | - | 0.372 | - | - | - | - | - | - | - | - | 0.31 |
| J | 0.06 | 0.34 | 1.82 | 0.023 | 0.005 | 0.066 | 0.061 | 0.0051 | 0.0069 | - | - | - | 0.076 | - | - | - | - | - | - | - | 0.37 |
| K | 0.08 | 0.41 | 1.77 | 0.007 | 0.003 | 0.064 | 0.024 | 0.0074 | 0.0084 | - | - | - | - | 0.063 | - | - | - | - | - | - | 0.37 |
| L | 0.11 | 0.37 | 1.32 | 0.014 | 0.018 | 0.055 | 0.045 | 0.0047 | 0.0040 | - | - | - | - | - | 0.159 | - | - | - | - | - | 0.36 |
| M | 0.13 | 0.26 | 1.36 | 0.013 | 0.021 | 0.032 | 0.057 | 0.0044 | 0.0063 | - | - | - | - | - | - | 0.0103 | - | - | - | - | 0.35 |
| N | 0.10 | 0.45 | 1.57 | 0.025 | 0.018 | 0.048 | 0.070 | 0.0075 | 0.0067 | - | - | - | - | - | - | - | 0.068 | - | - | - | 0.37 |
| O | 0.13 | 0.36 | 1.15 | 0.021 | 0.005 | 0.028 | 0.060 | 0.0033 | 0.0060 | - | - | - | - | - | - | - | - | 0.0030 | - | - | 0.32 |
| P | 0.06 | 0.44 | 2.05 | 0.018 | 0.013 | 0.068 | 0.057 | 0.0073 | 0.0063 | - | - | - | - | - | - | - | - | - | 0.0119 | - | 0.40 |
| Q | 0.04 | 0.56 | 1.75 | 0.014 | 0.009 | 0.082 | 0.052 | 0.0056 | 0.0033 | - | - | - | - | 0.080 | - | - | - | - | - | 0.0280 | 0.33 |
| R | 0.06 | 0.42 | 1.08 | 0.025 | 0.002 | 0.044 | 0.027 | 0.0039 | 0.0058 | - | - | - | 0.476 | 0.056 | - | - | - | 0.0074 | - | 0.0285 | 0.34 |
| S | 0.07 | 0.43 | 1.24 | 0.022 | 0.018 | 0.038 | 0.033 | 0.0034 | 0.0018 | - | - | 0.619 | - | - | - | 0.0023 | - | - | 0.0162 | - | 0.40 |
| T | 0.06 | 0.35 | 1.12 | 0.014 | 0.011 | 0.045 | 0.067 | 0.0075 | 0.0043 | - | 1.843 | - | - | - | 0.097 | - | - | - | - | - | 0.39 |
| U | 0.08 | 0.43 | 0.68 | 0.020 | 0.009 | 0.045 | 0.022 | 0.0085 | 0.0061 | 0.984 | 0.910 | - | - | - | - | - | - | 0.0043 | - | 0.0191 | 0.32 |
| V | **0.28** | 0.31 | 0.98 | 0.006 | 0.011 | 0.054 | **0.232** | 0.0038 | 0.0067 | - | - | - | - | - | - | - | - | - | - | - | 0.44 |
| W | 0.07 | 0.49 | 1.83 | **0.050** | 0.009 | 0.021 | 0.079 | 0.0084 | 0.0047 | - | - | - | - | - | - | - | - | - | - | - | 0.38 |
| X | 0.07 | 0.32 | 0.92 | 0.017 | **0.029** | 0.036 | 0.089 | 0.0021 | 0.0011 | - | - | - | - | - | - | - | - | - | - | - | **0.23** |
| Y | 0.12 | 0.29 | **4.31** | 0.018 | 0.011 | 0.062 | 0.037 | 0.0025 | 0.0050 | - | - | - | - | - | - | - | - | - | - | - | **0.84** |
| Z | 0.09 | **1.56** | 1.64 | 0.020 | 0.004 | **0.261** | 0.056 | 0.0056 | 0.0075 | - | - | - | - | - | - | - | - | - | - | - | 0.37 |

*1: The balance consists of Fe and incidental impurities.

*2: Ceq = [C] + [Mn]/6 + ([Cr] + [Mo] + [V])/5 + ([Cu] + [Ni])/15, where each element symbol denotes the amount of corresponding element (mass%), and if the element is not contained, the amount is 0.

*3: The "-" cell indicates that the element is not intentionally added, and includes not only the case where the element is not contained (0%), but also the case where the element is unavoidably contained.

Each slab containing the above-described components was sequentially subjected to heating, hot rolling, and cooling steps to produce a steel plate having a plate thickness T (mm) given in Table 2. In the hot rolling step, the rolling start temperature was in the range of 990°C to 1,140°C at the surface layer of the steel plate, and the rolling finish temperature was in the range of 670°C to 830°C at the surface layer of the steel plate. Regarding the temperature of the steel plate, the temperature of the surface layer was measured with the radiation thermometer. The temperature at the center position of the plate thickness was measured by attaching a thermocouple to the center position of the plate thickness of the steel plate. Cooling after the hot rolling was performed by spraying water at a high flow rate onto the front and back surfaces of the steel plate. This steel plate was subjected to edge preparation. The steel type of the steel plate subjected to edge preparation, the plate thickness, the groove shape, and the drawing number of the drawing illustrating the plate thickness and groove shape are summarized in Table 2.

[Table 2]

| Steel type of steel plate | Plate thickness T (mm) | Groove shape | Drawing |
|---|---|---|---|
| A | 50.0 | V | 2(a), 2(b), 2(e) |
| B | 50.0 | X | 2(c), 2(d), 2(f) |
| C | 100.0 | V | 3(a), 3(b), 3(e) |
| D | 100.0 | X | 3(c), 3(d), 3(f) |

(continued)

| Steel type of steel plate | Plate thickness T (mm) | Groove shape | Drawing |
|---|---|---|---|
| E | 150.0 | V | 4(a), 4(b), 4(e) |
| F | 150.0 | X | 4(c), 4(d), 4(f) |
| G | 100.0 | X | 3(c) |
| H | 100.0 | X | 3(c) |
| I | 100.0 | X | 3(c) |
| J | 100.0 | X | 3(c) |
| K | 100.0 | X | 3(c) |
| L | 100.0 | X | 3(c) |
| M | 100.0 | X | 3(c) |
| N | 100.0 | X | 3(c) |
| O | 100.0 | X | 3(c) |
| P | 100.0 | X | 3(c) |
| Q | 100.0 | X | 3(c) |
| R | 100.0 | X | 3(c) |
| S | 100.0 | X | 3(c) |
| T | 100.0 | X | 3(c) |
| U | 100.0 | X | 3(c) |
| V | 100.0 | X | 3(c) |
| W | 100.0 | X | 3(c) |
| X | 100.0 | X | 3(c) |
| Y | 100.0 | X | 3(c) |
| Z | 100.0 | X | 3(c) |

Molten steels having chemical compositions (welding material compositions) given in Table 3 were produced in a vacuum melting furnace and cast into steel ingots. The resulting steel ingots were heated to 1,200°C, and then subjected to hot rolling and cold rolling to produce solid wires for submerged arc welding with diameters of ø4.0 mm and ø2.4 mm, and solid wires for gas metal arc welding with a diameter of 1.2 mm.

In addition, flux-cored wires were separately produced, each wire including a steel sheath that contained both a metal powder and a flux powder. Steel sheets each having a sheet thickness of 0.5 mm and a composition consisting of 0.1% C-0.2% Si-0.5% Mn-balance Fe were used as sheath materials made of steels, and subjected to cold bending in the width direction to form a U-shape. Then, a metal powder and a flux powder having compositions adjusted in such a manner that the chemical compositions given in Table 3 were achieved and were filled into the resulting steel sheaths. They were subjected to cold drawing to form flux-cored wires for welding (diameters: 4.0, 2.4, and 1.2 mm). That is, the chemical compositions given in Table 3 are the total values of the steel sheath, the metal powder, and the flux powder.

[Table 3]

| Wire steel type | Target welding method | Wire type | Wire diameter (mm) | Chemical composition (mass%) *1 | | | | | | | | | | | | | | |
|---|---|---|---|---|---|---|---|---|---|---|---|---|---|---|---|---|---|---|
| | | | | C | Si | Mn | P | S | Ti | B | O | N | Cu | Ni | Cr | Mo | V | Others |
| a | Submerged arc welding | Solid wire | 4.0, 2.4 | 0.06 | 0.18 | 1.05 | 0.013 | 0.009 | 0.012 | 0.002 | 0.0064 | 0.0087 | 0.52 | 1.61 | 0.36 | 0.53 | 0.06 | - |
| b | Submerged arc welding | Solid wire | 4.0, 2.4 | **0.01** | **1.34** | 1.70 | 0.017 | 0.013 | 0.014 | 0.007 | 0.0127 | 0.0042 | 0.37 | 0.44 | 0.74 | 0.17 | 0.08 | - |
| c | Submerged arc welding | Flux-cored wire | 4.0, 2.4 | 0.08 | 0.11 | 1.74 | 0.013 | 0.016 | 0.015 | 0.008 | 0.0125 | 0.0180 | 0.17 | 1.33 | 0.43 | 0.60 | 0.06 | - |
| d | Submerged arc welding | Flux-cored wire | 4.0, 2.4 | **0.38** | 0.08 | 0.66 | 0.012 | 0.009 | 0.012 | 0.007 | 0.0067 | 0.0086 | 0.22 | 1.31 | 0.59 | 0.42 | 0.07 | - |
| e | Gas metal arc welding | Solid wire | 1.2 | 0.05 | 0.10 | 0.97 | 0.014 | 0.016 | 0.009 | 0.005 | 0.0067 | 0.0041 | 0.16 | 1.31 | 0.35 | 0.25 | 0.06 | - |
| f | Gas metal arc welding | Solid wire | 1.2 | 0.05 | 0.18 | **6.50** | 0.009 | 0.011 | 0.011 | 0.003 | 0.0089 | 0.0141 | 0.35 | 1.34 | 0.40 | 0.66 | 0.06 | - |
| g | Gas metal arc welding | Flux-cored wire | 1.2 | 0.11 | 0.10 | 1.21 | 0.016 | 0.018 | 0.016 | 0.003 | 0.0233 | 0.0163 | 0.15 | 1.94 | 0.40 | 0.73 | 0.06 | - |
| h | Gas metal arc welding | Flux-cored wire | 1.2 | 0.07 | 0.03 | 0.81 | **0.052** | **0.049** | 0.017 | 0.005 | 0.0207 | 0.0188 | 0.31 | 1.68 | 0.45 | 0.39 | 0.05 | - |

*1: The balance consists of Fe and incidental impurities.

EP 4 628 238 A1

19

The steel plates having the groove shapes given in Table 2 above were butted together and restrained to form grooves illustrated in Figs. 2 to 4. Using the solid wire or flux-cored wire with the chemical composition given in Table 3 as the welding material, submerged arc welding or gas metal arc welding was performed on the groove of the steel plates butted together. In this manner, a weld metal was formed in the groove to provide a welded joint. During the submerged arc welding, a flux having a composition consisting of 38% $SiO_2$-11% MnO-8% $TiO_2$-16% $Al_2O_3$-27% MgO was used.

Welding experiments described below were performed using the steel plates having the groove shapes given in Table 2 and the wires having the chemical compositions given in Table 3, in the combinations given in Table 4.

[Table 4]

| Joint No. | Steel type of steel plate | Wire steel type | Welding method |
|---|---|---|---|
| 1 | A | a | Submerged arc welding |
| 2 | A | a | Submerged arc welding |
| 3 | A | b | Submerged arc welding |
| 4 | A | c | Submerged arc welding |
| 5 | A | d | Submerged arc welding |
| 6 | B | a | Submerged arc welding |
| 7 | B | a | Submerged arc welding |
| 8 | B | b | Submerged arc welding |
| 9 | B | c | Submerged arc welding |
| 10 | B | d | Submerged arc welding |
| 11 | C | a | Submerged arc welding |
| 12 | C | a | Submerged arc welding |
| 13 | C | b | Submerged arc welding |
| 14 | C | c | Submerged arc welding |
| 15 | C | d | Submerged arc welding |
| 16 | D | a | Submerged arc welding |
| 17 | D | a | Submerged arc welding |
| 18 | D | b | Submerged arc welding |
| 19 | D | c | Submerged arc welding |
| 20 | D | d | Submerged arc welding |
| 21 | E | a | Submerged arc welding |
| 22 | E | a | Submerged arc welding |
| 23 | E | b | Submerged arc welding |
| 24 | E | c | Submerged arc welding |
| 25 | E | d | Submerged arc welding |
| 26 | F | a | Submerged arc welding |
| 27 | F | a | Submerged arc welding |
| 28 | F | b | Submerged arc welding |
| 29 | F | c | Submerged arc welding |
| 30 | F | d | Submerged arc welding |
| 31 | G | a | Submerged arc welding |
| 32 | H | a | Submerged arc welding |
| 33 | I | a | Submerged arc welding |
| 34 | J | a | Submerged arc welding |

(continued)

| Joint No. | Steel type of steel plate | Wire steel type | Welding method |
|---|---|---|---|
| 35 | K | a | Submerged arc welding |
| 36 | L | a | Submerged arc welding |
| 37 | M | a | Submerged arc welding |
| 38 | N | a | Submerged arc welding |
| 39 | O | a | Submerged arc welding |
| 40 | P | a | Submerged arc welding |
| 41 | Q | a | Submerged arc welding |
| 42 | R | a | Submerged arc welding |
| 43 | S | a | Submerged arc welding |
| 44 | T | a | Submerged arc welding |
| 45 | U | a | Submerged arc welding |
| 46 | V | a | Submerged arc welding |
| 47 | W | a | Submerged arc welding |
| 48 | X | a | Submerged arc welding |
| 49 | Y | a | Submerged arc welding |
| 50 | Z | a | Submerged arc welding |
| 51 | A | e | Gas metal arc welding |
| 52 | A | e | Gas metal arc welding |
| 53 | A | f | Gas metal arc welding |
| 54 | A | g | Gas metal arc welding |
| 55 | A | h | Gas metal arc welding |
| 56 | B | e | Gas metal arc welding |
| 57 | B | e | Gas metal arc welding |
| 58 | B | f | Gas metal arc welding |
| 59 | B | g | Gas metal arc welding |
| 60 | B | h | Gas metal arc welding |
| 61 | C | e | Gas metal arc welding |
| 62 | C | e | Gas metal arc welding |
| 63 | C | f | Gas metal arc welding |
| 64 | C | g | Gas metal arc welding |
| 65 | C | h | Gas metal arc welding |
| 66 | D | e | Gas metal arc welding |
| 67 | D | e | Gas metal arc welding |
| 68 | D | f | Gas metal arc welding |
| 69 | D | g | Gas metal arc welding |
| 70 | D | h | Gas metal arc welding |
| 71 | E | e | Gas metal arc welding |
| 72 | E | e | Gas metal arc welding |
| 73 | E | f | Gas metal arc welding |

(continued)

| Joint No. | Steel type of steel plate | Wire steel type | Welding method |
|---|---|---|---|
| 74 | E | g | Gas metal arc welding |
| 75 | E | h | Gas metal arc welding |
| 76 | F | e | Gas metal arc welding |
| 77 | F | e | Gas metal arc welding |
| 78 | F | f | Gas metal arc welding |
| 79 | F | g | Gas metal arc welding |
| 80 | F | h | Gas metal arc welding |
| 81 | V | e | Gas metal arc welding |
| 82 | W | e | Gas metal arc welding |
| 83 | X | e | Gas metal arc welding |
| 84 | Y | e | Gas metal arc welding |
| 85 | Z | e | Gas metal arc welding |

For submerged arc welding, the specific experimental conditions were as follows: no preheating, a flat position, current: 550 to 1,000 A, voltage: 24 to 44 V, welding speed: 500 to 1,400 mm/min, and interpass temperature: 200°C or lower. The experimental conditions are given in Table 5.

[Table 5]

| Joint No. | Leading electrode | | | Trailing electrode | | | Welding speed (mm/min) | Welding heat input (kJ/mm) | Interpass temperature range (°C) |
|---|---|---|---|---|---|---|---|---|---|
| | Current (A) | Voltage (V) | Wire diameter (mm) | Current (A) | Voltage (V) | Wire diameter (mm) | | | |
| 1 | 700 | 34 | 4.0 | 550 | 36 | 2.4 | 1000 | 2.62 | <200 |
| 2 | 700 | 34 | 4.0 | 550 | 36 | 2.4 | 1000 | 2.62 | <200 |
| 3 | 700 | 34 | 4.0 | 550 | 36 | 2.4 | 1000 | 2.62 | <200 |
| 4 | 700 | 34 | 4.0 | 550 | 36 | 2.4 | 1000 | 2.62 | <200 |
| 5 | 700 | 34 | 4.0 | 550 | 36 | 2.4 | 1000 | 2.62 | <200 |
| 6 | 700 | 34 | 4.0 | 550 | 36 | 2.4 | 1000 | 2.62 | <200 |
| 7 | 700 | 34 | 4.0 | 550 | 36 | 2.4 | 1000 | 2.62 | <200 |
| 8 | 700 | 34 | 4.0 | 550 | 36 | 2.4 | 1000 | 2.62 | <200 |
| 9 | 700 | 34 | 4.0 | 550 | 36 | 2.4 | 1000 | 2.62 | <200 |
| 10 | 700 | 34 | 4.0 | 550 | 36 | 2.4 | 1000 | 2.62 | <200 |
| 11 | 700 | 34 | 4.0 | 550 | 36 | 2.4 | 1000 | 2.62 | <200 |
| 12 | 700 | 34 | 4.0 | 550 | 36 | 2.4 | 1000 | 2.62 | <200 |
| 13 | 700 | 34 | 4.0 | 550 | 36 | 2.4 | 1000 | 2.62 | <200 |
| 14 | 700 | 34 | 4.0 | 550 | 36 | 2.4 | 1000 | 2.62 | <200 |
| 15 | 700 | 34 | 4.0 | 550 | 36 | 2.4 | 1000 | 2.62 | <200 |
| 16 | 700 | 34 | 4.0 | 550 | 36 | 2.4 | 1000 | 2.62 | <200 |
| 17 | 700 | 34 | 4.0 | 550 | 36 | 2.4 | 1000 | 2.62 | <200 |
| 18 | 700 | 34 | 4.0 | 550 | 36 | 2.4 | 1000 | 2.62 | <200 |
| 19 | 700 | 34 | 4.0 | 550 | 36 | 2.4 | 1000 | 2.62 | <200 |

(continued)

| Joint No. | Leading electrode | | | Trailing electrode | | | Welding speed (mm/min) | Welding heat input (kJ/mm) | Interpass temperature range (°C) |
|---|---|---|---|---|---|---|---|---|---|
| | Current (A) | Voltage (V) | Wire diameter (mm) | Current (A) | Voltage (V) | Wire diameter (mm) | | | |
| 20 | 700 | 34 | 4.0 | 550 | 36 | 2.4 | 1000 | 2.62 | <200 |
| 21 | 700 | 34 | 4.0 | 550 | 36 | 2.4 | 1000 | 2.62 | <200 |
| 22 | 700 | 34 | 4.0 | 550 | 36 | 2.4 | 1000 | 2.62 | <200 |
| 23 | 700 | 34 | 4.0 | 550 | 36 | 2.4 | 1000 | 2.62 | <200 |
| 24 | 700 | 34 | 4.0 | 550 | 36 | 2.4 | 1000 | 2.62 | <200 |
| 25 | 700 | 34 | 4.0 | 550 | 36 | 2.4 | 1000 | 2.62 | <200 |
| 26 | 700 | 34 | 4.0 | 550 | 36 | 2.4 | 1000 | 2.62 | <200 |
| 27 | 700 | 34 | 4.0 | 550 | 36 | 2.4 | 1000 | 2.62 | <200 |
| 28 | 700 | 34 | 4.0 | 550 | 36 | 2.4 | 1000 | 2.62 | <200 |
| 29 | 700 | 34 | 4.0 | 550 | 36 | 2.4 | 1000 | 2.62 | <200 |
| 30 | 700 | 34 | 4.0 | 550 | 36 | 2.4 | 1000 | 2.62 | <200 |
| 31 | 660 | 26 | 4.0 | 500 | 32 | 2.4 | 500 | 3.98 | <200 |
| 32 | 660 | 24 | 4.0 | 660 | 30 | 2.4 | 600 | 3.56 | <200 |
| 33 | 800 | 36 | 4.0 | 600 | 42 | 2.4 | 500 | 6.48 | <200 |
| 34 | 800 | 36 | 4.0 | 550 | 44 | 2.4 | 900 | 3.53 | <200 |
| 35 | 800 | 36 | 4.0 | 600 | 42 | 2.4 | 900 | 3.60 | <200 |
| 36 | 1000 | 36 | 4.0 | 800 | 36 | 2.4 | 1400 | 2.78 | <200 |
| 37 | 800 | 34 | 4.0 | 700 | 32 | 2.4 | 800 | 3.72 | <200 |
| 38 | 800 | 36 | 4.0 | 700 | 32 | 2.4 | 800 | 3.84 | <200 |
| 39 | 800 | 36 | 4.0 | 700 | 32 | 2.4 | 800 | 3.84 | <200 |
| 40 | 800 | 36 | 4.0 | 700 | 32 | 2.4 | 800 | 3.84 | <200 |
| 41 | 800 | 36 | 4.0 | 700 | 32 | 2.4 | 800 | 3.84 | <200 |
| 42 | 800 | 36 | 4.0 | 700 | 32 | 2.4 | 800 | 3.84 | <200 |
| 43 | 800 | 36 | 4.0 | 700 | 32 | 2.4 | 800 | 3.84 | <200 |
| 44 | 800 | 36 | 4.0 | 700 | 32 | 2.4 | 800 | 3.84 | <200 |
| 45 | 800 | 36 | 4.0 | 700 | 32 | 2.4 | 800 | 3.84 | <200 |
| 46 | 800 | 36 | 4.0 | 700 | 32 | 2.4 | 800 | 3.84 | <200 |
| 47 | 800 | 36 | 4.0 | 700 | 32 | 2.4 | 800 | 3.84 | <200 |
| 48 | 800 | 36 | 4.0 | 700 | 32 | 2.4 | 800 | 3.84 | <200 |
| 49 | 800 | 36 | 4.0 | 700 | 32 | 2.4 | 800 | 3.84 | <200 |
| 50 | 800 | 36 | 4.0 | 700 | 32 | 2.4 | 800 | 3.84 | <200 |

For gas metal arc welding, the specific experimental conditions were as follows: no preheating, flat position welding, current: 200 to 400 A, voltage: 26 to 44 V, welding speed: 100 to 800 mm/min, and interpass temperature: 200°C or lower. The experimental conditions are given in Table 6.

[Table 6]

| Joint No. | Current (A) | Voltage (V) | Wire diameter (mm) | Welding speed (mm/min) | Welding heat input (kJ/mm) | Interpass temperature (°C) |
|---|---|---|---|---|---|---|
| 51 | 280 | 33 | 2.4 | 400 | 1.39 | <200 |
| 52 | 280 | 33 | 2.4 | 400 | 1.39 | <200 |
| 53 | 280 | 33 | 2.4 | 400 | 1.39 | <200 |
| 54 | 280 | 33 | 2.4 | 400 | 1.39 | <200 |
| 55 | 280 | 33 | 2.4 | 400 | 1.39 | <200 |
| 56 | 400 | 44 | 2.4 | 800 | 1.32 | <200 |
| 57 | 400 | 44 | 2.4 | 800 | 1.32 | <200 |
| 58 | 400 | 44 | 2.4 | 800 | 1.32 | <200 |
| 59 | 400 | 44 | 2.4 | 800 | 1.32 | <200 |
| 60 | 400 | 44 | 2.4 | 800 | 1.32 | <200 |
| 61 | 330 | 30 | 2.4 | 180 | 3.30 | <200 |
| 62 | 330 | 30 | 2.4 | 180 | 3.30 | <200 |
| 63 | 330 | 30 | 2.4 | 180 | 3.30 | <200 |
| 64 | 330 | 30 | 2.4 | 180 | 3.30 | <200 |
| 65 | 330 | 30 | 2.4 | 180 | 3.30 | <200 |
| 66 | 200 | 26 | 2.4 | 100 | 3.12 | <200 |
| 67 | 200 | 26 | 2.4 | 100 | 3.12 | <200 |
| 68 | 200 | 26 | 2.4 | 100 | 3.12 | <200 |
| 69 | 200 | 26 | 2.4 | 100 | 3.12 | <200 |
| 70 | 200 | 26 | 2.4 | 100 | 3.12 | <200 |
| 71 | 360 | 26 | 2.4 | 200 | 2.81 | <200 |
| 72 | 360 | 26 | 2.4 | 200 | 2.81 | <200 |
| 73 | 360 | 26 | 2.4 | 200 | 2.81 | <200 |
| 74 | 360 | 26 | 2.4 | 200 | 2.81 | <200 |
| 75 | 360 | 26 | 2.4 | 200 | 2.81 | <200 |
| 76 | 300 | 33 | 2.4 | 180 | 3.30 | <200 |
| 77 | 300 | 33 | 2.4 | 180 | 3.30 | <200 |
| 78 | 300 | 33 | 2.4 | 180 | 3.30 | <200 |
| 79 | 300 | 33 | 2.4 | 180 | 3.30 | <200 |
| 80 | 300 | 33 | 2.4 | 180 | 3.30 | <200 |
| 81 | 300 | 33 | 2.4 | 180 | 3.30 | <200 |
| 82 | 300 | 33 | 2.4 | 180 | 3.30 | <200 |
| 83 | 300 | 33 | 2.4 | 180 | 3.30 | <200 |
| 84 | 300 | 33 | 2.4 | 180 | 3.30 | <200 |
| 85 | 300 | 33 | 2.4 | 180 | 3.30 | <200 |

[Evaluation of Weld Metal Shape]

Sections of a welded joint in the vertical direction were formed as illustrated in Fig. 1. The samples of the microstructure of the welded joint were taken from the sections located at 1/4L, 2/4L, and 3/4L positions in the weld line direction and subjected to macroscopic observation. The above-described L denotes the length of the weld line of the welded joint. The 1/4L position refers to a location situated at 1/4 of the plate width from the end portion of the steel plate in the longitudinal direction. Similarly, the 2/4L position refers to a location situated at 2/4 of the plate width from the end portion of the steel plate in the longitudinal direction (the center of the weld line). The 3/4L position refers to a location situated at 3/4 of the plate width from the end portion of the steel plate in the longitudinal direction.

Thereafter, for each layer of the weld metal excluding the first layer and the final layer, the width of the weld metal at the center line between the upper portion and the lower portion, i.e., the distance between the fusion lines, was measured to determine the width W (mm) for each layer, and the minimum and maximum values of the width W for the entire weld metal were recorded.

The sectional area A (mm$^2$) of the entire weld metal in a direction perpendicular to the weld line of the weld metal was measured, and a first ratio [A/p] obtained by dividing the sectional area A by the number of weld layers p (layers) was recorded. Similarly, a second ratio [p/T] obtained by dividing the number of weld layers p by the steel plate thickness T was recorded.

[Measurement of Dislocation Density in Steel Plate]

A sample was taken in such a manner that an evaluation surface was located 1 mm below a surface of each steel plate at the center position of the steel plate in the longitudinal direction and the center position of the steel plate in the width direction. A surface of the sample was mirror-polished by mechanical polishing and electrolytic polishing finish. The dislocation density p was evaluated by the Williamson-Hall method (Reference 1) using an X-ray diffractometer. (Reference 1) G.K. Williams and W.H. Hall: Acta Metall., 1(1953), 22

[Average Crystal Grain Size]

As described above, samples were taken in such a manner that an evaluation surface was located 1 mm below the surface of each steel plate at the central position of the steel plate in the longitudinal direction and at the central position of the steel plate in the width direction and in such a manner that an evaluation surface was the longitudinal section of the steel plate at the center position of the plate thickness of the steel plate. A surface of each sample was mirror-polished with colloidal silica finishing and was examined by electron backscatter diffraction (EBSP) under the following conditions. The crystal orientation measurement area was 300 um × 400 μm, and the measurement step size was 1 μm. The equivalent circle diameters of microstructures surrounded by high-angle grain boundaries with crystal orientation differences of 15° or more from adjacent crystal grains were determined from a crystal orientation map obtained through automated analysis of the measured crystal orientations. The average value of the equivalent circle diameters in the above measurement area was taken as the average crystal grain size. The steel plate of the present invention had a microstructure mainly composed of bainite and quasi-polygonal ferrite both at the surface layer and the center of the plate thickness.

[Evaluation of Hot Cracking Resistance and Lack of Fusion]

After welding the steel plates together, a macro test specimen having a thickness of 10 mm was taken from the center position in the weld line direction using a micro-cutter. The section of the sampled weld metal was observed with an optical microscope (30×) to check for hot cracking and a lack of fusion. When hot cracking was observed, the hot cracking resistance was considered low and was rated as "×". When no hot cracking was observed, the hot cracking resistance was considered good and was rated "o". Similarly, when lack of fusion was observed, it was rated as "×." When lack of fusion was not observed, it was rated as "○".

[Evaluation of Mechanical Properties of Weld Metal]

Test pieces for a tensile test (parallel section diameter 6 mm) and Charpy impact test specimens (V-notch) were taken from the weld metals of the welded joints in accordance with the provisions of JIS Z 3111:2005, and were subjected to the tensile test and an impact test. Three test pieces of each weld metal were subjected to the tensile test at room temperature. The average value of the measurements (0.2% proof stress, tensile strength) was regarded as the tensile properties of the weld metal of the welded joint. Similarly, three specimens of each weld metal were subjected to the Charpy impact test. The absorbed energy ($_vE_{-40}$) at a test temperature of -40°C was determined. The average value was regarded as the cryogenic toughness of the weld metal of the welded joint.

In addition, the welded joints were also subjected to a tensile test at room temperature in accordance with the provisions of JIS Z 3121:2013. Test specimens were each taken in a direction perpendicular to the weld axis in such a manner that the weld axis was in the center of the length of the parallel section of the test specimen. The thickness of the test specimen was the entire thickness of the welded joint. That is, the test specimens were Type 1A test specimens.

Furthermore, a Charpy impact test was also performed on the heat-affected zone of each welded joint in accordance with the provisions of JIS Z 3128:2017. The V-notch direction of each test specimen was perpendicular to a surface of the steel plate. The test specimens were taken at the center position of the weld metal, at the fusion line, and at a position +1 mm from the fusion line, all in the center of the plate thickness.

As described above, the target values in the present invention are a room temperature yield strength (0.2% proof stress) of the weld metal of 325 MPa or more, a tensile strength of the weld metal of 520 MPa or more, and a roomtemperature tensile strength of the welded joint of 520 MPa or more. Furthermore, the absorbed energy ($_vE_{-40}$) of the Charpy impact test at a test temperature of -40°C for the weld metal and the heat-affected zone is 30 J or more.

[Deposition Efficiency]

The wire diameter (mm) used during welding and the feed rate (mm/min) of each wire were measured. The value obtained by division by the unit welding time (min) was recorded as deposition efficiency (g/min).

From the above experimental results, the chemical compositions of the resulting weld metals are presented in Table 7 (Tables 7-1 and 7-2). The results of the weld metal geometries, such as the sectional area and the number of weld layers, defects in the weld metals, and the properties thereof are presented in Table 8 (Tables 8-1 and 8-2).

[Table 7-1]

| Joint No. | Steel type of steel plate | Wire steel type | Groove Shape | Groove Relevant drawing | C | Si | Mn | P | S | Nb | Al | O | N | Cu | Ni | Cr | Mo | Ti | V | B | W | Ca | Mg | REM |
|---|---|---|---|---|---|---|---|---|---|---|---|---|---|---|---|---|---|---|---|---|---|---|---|---|
| 1 | A | a | V | 2(a) | 0.08 | 0.24 | 1.28 | 0.014 | 0.009 | 0.024 | 0.042 | 0.016 | 0.009 | 0.238 | 0.633 | 0.142 | 0.394 | 0.008 | 0.058 | 0.001 | - | - | - | - |
| 2 | A | a | V | 2(e) | 0.08 | 0.22 | 1.30 | 0.014 | 0.009 | 0.025 | 0.058 | 0.020 | 0.006 | 0.190 | 0.590 | 0.110 | 0.360 | 0.006 | 0.010 | 0.001 | - | - | - | - |
| 3 | A | b | V | 2(a) | 0.02 | 1.01 | 1.64 | 0.017 | 0.011 | 0.015 | 0.038 | 0.022 | 0.007 | 0.270 | 0.207 | 0.512 | 0.110 | 0.003 | 0.044 | 0.003 | - | - | - | - |
| 4 | A | c | V | 2(a) | 0.09 | 0.22 | 1.68 | 0.014 | 0.015 | 0.011 | 0.020 | 0.013 | 0.009 | 0.094 | 0.849 | 0.238 | 0.516 | 0.005 | 0.042 | 0.001 | - | - | - | - |
| 5 | A | d | V | 2(a) | 0.26 | 0.20 | 1.05 | 0.013 | 0.009 | 0.026 | 0.033 | 0.016 | 0.009 | 0.083 | 0.313 | 0.232 | 0.099 | 0.006 | 0.049 | 0.004 | - | - | - | - |
| 6 | B | a | X | 2(c) | 0.06 | 0.28 | 1.19 | 0.015 | 0.009 | 0.029 | 0.006 | 0.017 | 0.007 | 0.163 | 0.399 | 0.270 | 0.287 | 0.005 | 0.061 | 0.002 | - | - | - | - |
| 7 | B | a | X | 2(f) | 0.06 | 0.30 | 1.58 | 0.015 | 0.009 | 0.061 | 0.020 | 0.020 | 0.005 | 0.170 | 0.530 | 0.120 | 0.370 | 0.006 | 0.010 | 0.001 | - | - | - | - |
| 8 | B | b | X | 2(c) | 0.01 | 0.97 | 1.77 | 0.016 | 0.011 | 0.032 | 0.028 | 0.020 | 0.007 | 0.174 | 0.262 | 0.145 | 0.122 | 0.012 | 0.032 | 0.004 | - | - | - | - |
| 9 | B | c | X | 2(c) | 0.07 | 0.24 | 1.78 | 0.015 | 0.012 | 0.027 | 0.018 | 0.019 | 0.004 | 0.052 | 1.014 | 0.196 | 0.165 | 0.008 | 0.021 | 0.007 | - | - | - | - |
| 10 | B | d | X | 2(c) | 0.18 | 0.18 | 1.16 | 0.024 | 0.009 | 0.026 | 0.017 | 0.017 | 0.008 | 0.111 | 0.135 | 0.414 | 0.096 | 0.004 | 0.061 | 0.005 | - | - | - | - |
| 11 | C | a | V | 3(a) | 0.09 | 0.24 | 1.34 | 0.011 | 0.010 | 0.045 | 0.033 | 0.015 | 0.003 | 0.229 | 0.665 | 0.069 | 0.003 | 0.008 | 0.040 | 0.001 | - | - | - | - |
| 12 | C | a | V | 3(e) | 0.09 | 0.22 | 1.20 | 0.012 | 0.010 | 0.056 | 0.035 | 0.020 | 0.005 | 0.150 | 0.520 | 0.060 | 0.010 | 0.005 | 0.030 | 0.001 | - | - | - | - |
| 13 | C | b | V | 3(a) | 0.05 | 1.12 | 1.58 | 0.014 | 0.013 | 0.010 | 0.053 | 0.018 | 0.002 | 0.109 | 0.102 | 0.247 | 0.094 | 0.011 | 0.023 | 0.004 | - | - | - | - |
| 14 | C | c | V | 3(a) | 0.09 | 0.21 | 1.56 | 0.011 | 0.015 | 0.047 | 0.048 | 0.018 | 0.004 | 0.048 | 0.841 | 0.201 | 0.230 | 0.005 | 0.019 | 0.003 | - | - | - | - |
| 15 | C | d | V | 3(a) | 0.25 | 0.15 | 0.69 | 0.010 | 0.010 | 0.035 | 0.029 | 0.016 | 0.004 | 0.120 | 1.041 | 0.298 | 0.180 | 0.006 | 0.049 | 0.005 | - | - | - | - |
| 16 | D | a | X | 3(c) | 0.08 | 0.39 | 1.09 | 0.011 | 0.008 | 0.023 | 0.058 | 0.016 | 0.003 | 0.354 | 0.506 | 0.293 | 0.295 | 0.007 | 0.057 | 0.001 | - | - | - | - |
| 17 | D | a | X | 3(f) | 0.10 | 0.40 | 1.03 | 0.010 | 0.007 | 0.032 | 0.069 | 0.030 | 0.003 | 0.280 | 0.520 | 0.060 | 0.030 | 0.005 | 0.040 | 0.001 | - | - | - | - |
| 18 | D | b | X | 3(c) | 0.09 | 0.97 | 1.22 | 0.012 | 0.010 | 0.009 | 0.040 | 0.013 | 0.002 | 0.214 | 0.344 | 0.468 | 0.058 | 0.005 | 0.031 | 0.004 | - | - | - | - |
| 19 | D | c | X | 3(c) | 0.10 | 0.33 | 1.35 | 0.011 | 0.009 | 0.015 | 0.034 | 0.019 | 0.000 | 0.089 | 0.457 | 0.064 | 0.213 | 0.010 | 0.044 | 0.003 | - | - | - | - |
| 20 | D | d | X | 3(c) | 0.23 | 0.30 | 0.76 | 0.011 | 0.008 | 0.005 | 0.003 | 0.016 | 0.003 | 0.130 | 0.789 | 0.374 | 0.160 | 0.007 | 0.046 | 0.003 | - | - | - | - |
| 21 | E | a | V | 4(a) | 0.08 | 0.28 | 1.57 | 0.010 | 0.010 | 0.008 | 0.013 | 0.016 | 0.004 | 0.319 | 1.361 | 0.245 | 0.332 | 0.005 | 0.056 | 0.001 | - | - | - | - |
| 22 | E | a | V | 4(e) | 0.08 | 0.38 | 1.60 | 0.012 | 0.009 | 0.012 | 0.020 | 0.030 | 0.004 | 0.280 | 1.180 | 0.200 | 0.310 | 0.005 | 0.040 | 0.001 | | | | |
| 23 | E | b | V | 4(a) | 0.08 | 0.79 | 1.70 | 0.011 | 0.012 | 0.013 | 0.012 | 0.020 | 0.003 | 0.140 | 0.196 | 0.351 | 0.103 | 0.008 | 0.020 | 0.005 | - | - | - | - |
| 24 | E | c | V | 4(a) | 0.09 | 0.26 | 1.72 | 0.011 | 0.015 | 0.012 | 0.016 | 0.015 | 0.006 | 0.088 | 1.024 | 0.268 | 0.270 | 0.008 | 0.021 | 0.001 | - | - | - | - |
| 25 | E | d | V | 4(a) | 0.29 | 0.21 | 1.23 | 0.011 | 0.010 | 0.010 | 0.010 | 0.017 | 0.004 | 0.055 | 0.101 | 0.251 | 0.277 | 0.003 | 0.049 | 0.002 | - | - | - | - |
| 26 | F | a | X | 4(c) | 0.07 | 0.32 | 1.39 | 0.012 | 0.015 | 0.006 | 0.016 | 0.015 | 0.002 | 0.319 | 0.752 | 0.110 | 0.354 | 0.008 | 0.064 | 0.001 | - | - | - | - |
| 27 | F | a | X | 4(f) | 0.07 | 0.33 | 1.41 | 0.011 | 0.016 | 0.006 | 0.025 | 0.020 | 0.001 | 0.300 | 0.550 | 0.100 | 0.320 | 0.007 | 0.060 | 0.001 | - | - | - | - |
| 28 | F | b | X | 4(c) | 0.03 | 1.13 | 1.71 | 0.014 | 0.017 | 0.022 | 0.017 | 0.017 | 0.001 | 0.128 | 0.314 | 0.345 | 0.058 | 0.002 | 0.043 | 0.004 | - | - | - | - |
| 29 | F | c | X | 4(c) | 0.07 | 0.32 | 1.73 | 0.011 | 0.019 | 0.025 | 0.032 | 0.018 | 0.001 | 0.085 | 0.474 | 0.291 | 0.234 | 0.003 | 0.043 | 0.001 | - | - | - | - |
| 30 | F | d | X | 4(c) | 0.25 | 0.41 | 1.60 | 0.011 | 0.015 | 0.019 | 0.001 | 0.014 | 0.004 | 0.163 | 0.944 | 0.464 | 0.257 | 0.009 | 0.020 | 0.004 | - | - | - | - |
| 31 | G | a | X | 3(c) | 0.06 | 0.33 | 1.39 | 0.016 | 0.008 | 0.042 | 0.040 | 0.017 | 0.003 | 0.694 | 0.674 | 0.134 | 0.396 | 0.010 | 0.035 | 0.000 | - | - | - | - |
| 32 | H | a | X | 3(c) | 0.13 | 0.33 | 1.06 | 0.015 | 0.008 | 0.028 | 0.011 | 0.016 | 0.002 | 0.334 | 1.515 | 0.250 | 0.167 | 0.007 | 0.044 | 0.001 | - | - | - | - |
| 33 | I | a | X | 3(c) | 0.07 | 0.26 | 0.98 | 0.014 | 0.012 | 0.031 | 0.031 | 0.016 | 0.003 | 0.295 | 1.122 | 0.377 | 0.088 | 0.001 | 0.056 | 0.001 | - | - | - | - |
| 34 | J | a | X | 3(c) | 0.06 | 0.24 | 1.51 | 0.018 | 0.006 | 0.058 | 0.011 | 0.016 | 0.004 | 0.368 | 1.062 | 0.210 | 0.161 | 0.004 | 0.041 | 0.001 | - | - | - | - |
| 35 | K | a | X | 3(c) | 0.07 | 0.25 | 1.36 | 0.011 | 0.007 | 0.020 | 0.005 | 0.016 | 0.004 | 0.296 | 1.298 | 0.082 | 0.185 | 0.040 | 0.034 | 0.000 | - | - | - | - |
| 36 | L | a | X | 3(c) | 0.09 | 0.20 | 1.20 | 0.013 | 0.013 | 0.025 | 0.030 | 0.016 | 0.003 | 0.340 | 0.437 | 0.109 | 0.131 | 0.006 | 0.117 | 0.001 | - | - | - | - |
| 37 | M | a | X | 3(c) | 0.10 | 0.20 | 1.18 | 0.013 | 0.014 | 0.013 | 0.032 | 0.014 | 0.004 | 0.256 | 0.743 | 0.109 | 0.036 | 0.006 | 0.016 | 0.005 | - | - | - | - |
| 38 | N | a | X | 3(c) | 0.08 | 0.28 | 1.32 | 0.018 | 0.013 | 0.014 | 0.041 | 0.017 | 0.004 | 0.354 | 1.450 | 0.197 | 0.386 | 0.006 | 0.038 | 0.001 | 0.050 | - | - | - |
| 39 | O | a | X | 3(c) | 0.10 | 0.29 | 1.09 | 0.014 | 0.009 | 0.011 | 0.042 | 0.014 | 0.004 | 0.167 | 0.910 | 0.176 | 0.165 | 0.011 | 0.042 | 0.001 | - | 0.0023 | - | - |
| 40 | P | a | X | 3(c) | 0.06 | 0.24 | 1.22 | 0.016 | 0.010 | 0.030 | 0.041 | 0.017 | 0.004 | 0.240 | 0.497 | 0.022 | 0.386 | 0.005 | 0.048 | 0.001 | - | - | 0.0068 | - |
| 41 | Q | a | X | 3(c) | 0.05 | 0.33 | 1.36 | 0.013 | 0.009 | 0.027 | 0.028 | 0.016 | 0.003 | 0.441 | 0.905 | 0.048 | 0.236 | 0.054 | 0.055 | 0.000 | - | - | - | 0.0185 |
| 42 | R | a | X | 3(c) | 0.06 | 0.28 | 1.06 | 0.019 | 0.007 | 0.026 | 0.025 | 0.015 | 0.004 | 0.285 | 0.845 | 0.199 | 0.501 | 0.037 | 0.051 | 0.001 | - | 0.0040 | - | 0.0189 |
| 43 | S | a | X | 3(c) | 0.07 | 0.37 | 1.19 | 0.019 | 0.011 | 0.020 | 0.022 | 0.015 | 0.003 | 0.335 | 0.831 | 0.541 | 0.317 | 0.004 | 0.068 | 0.002 | - | - | 0.0098 | - |
| 44 | T | a | X | 3(c) | 0.06 | 0.24 | 1.08 | 0.013 | 0.010 | 0.018 | 0.037 | 0.017 | 0.003 | 0.187 | 1.733 | 0.283 | 0.289 | 0.003 | 0.088 | 0.001 | - | - | - | - |
| 45 | U | a | X | 3(c) | 0.08 | 0.36 | 0.87 | 0.015 | 0.009 | 0.041 | 0.009 | 0.017 | 0.003 | 0.654 | 1.574 | 0.187 | 0.395 | 0.004 | 0.045 | 0.001 | - | 0.0010 | - | 0.0037 |
| 46 | V | a | X | 3(c) | 0.15 | 0.22 | 1.04 | 0.008 | 0.010 | 0.033 | 0.103 | 0.015 | 0.004 | 0.197 | 0.575 | 0.161 | 0.148 | 0.011 | 0.044 | 0.001 | - | - | - | - |
| 47 | W | a | X | 3(c) | 0.07 | 0.19 | 1.57 | 0.043 | 0.009 | 0.001 | 0.029 | 0.017 | 0.003 | 0.176 | 0.818 | 0.250 | 0.129 | 0.008 | 0.021 | 0.001 | - | - | - | - |
| 48 | X | a | X | 3(c) | 0.07 | 0.27 | 0.96 | 0.015 | 0.040 | 0.021 | 0.072 | 0.015 | 0.003 | 0.227 | 1.308 | 0.185 | 0.331 | 0.009 | 0.051 | 0.001 | - | - | - | - |
| 49 | Y | a | X | 3(c) | 0.09 | 0.20 | 2.68 | 0.015 | 0.010 | 0.058 | 0.016 | 0.015 | 0.004 | 0.361 | 1.172 | 0.249 | 0.145 | 0.005 | 0.055 | 0.001 | - | - | - | - |
| 50 | Z | a | X | 3(c) | 0.07 | 0.74 | 1.38 | 0.017 | 0.006 | 0.189 | 0.012 | 0.016 | 0.004 | 0.299 | 0.627 | 0.153 | 0.299 | 0.006 | 0.034 | 0.001 | - | - | - | - |

*1: The balance consists of Fe and incidental impurities.

[Table 7-2]

| Joint No. | Steel type of steel plate | Wire steel type | Groove Shape | Groove Relevant drawing | C | Si | Mn | P | S | Nb | Al | O | N | Cu | Ni | Cr | Mo | Ti | V | B | W | Ca | Mg | REM |
|---|---|---|---|---|---|---|---|---|---|---|---|---|---|---|---|---|---|---|---|---|---|---|---|---|
| 51 | A | e | V | 2(b) | 0.06 | 0.17 | 1.14 | 0.016 | 0.014 | 0.015 | 0.038 | 0.015 | 0.002 | 0.328 | 0.836 | 0.121 | 0.252 | 0.006 | 0.045 | 0.001 | - | - | - | - |
| 52 | A | e | V | 2(e) | 0.06 | 0.19 | 1.16 | 0.015 | 0.013 | 0.021 | 0.042 | 0.020 | 0.002 | 0.300 | 0.790 | 0.110 | 0.250 | 0.001 | 0.040 | 0.001 | - | - | - | - |
| 53 | A | f | V | 2(b) | 0.06 | 0.22 | **4.15** | 0.014 | 0.010 | 0.010 | 0.029 | 0.018 | 0.006 | 0.200 | 0.179 | 0.213 | 0.076 | 0.006 | 0.026 | 0.001 | - | - | - | - |
| 54 | A | g | V | 2(b) | 0.10 | 0.12 | 1.38 | 0.016 | 0.013 | 0.019 | 0.051 | 0.023 | 0.004 | 0.116 | 1.002 | 0.154 | 0.584 | 0.005 | 0.029 | 0.001 | - | - | - | - |
| 55 | A | h | V | 2(b) | 0.08 | 0.23 | 1.28 | **0.038** | **0.026** | 0.020 | 0.050 | 0.023 | 0.007 | 0.214 | 1.023 | 0.222 | 0.233 | 0.012 | 0.058 | 0.002 | - | - | - | - |
| 56 | B | e | X | 2(d) | 0.05 | 0.25 | 1.47 | 0.014 | 0.012 | 0.002 | 0.022 | 0.017 | 0.002 | 0.260 | 0.871 | 0.183 | 0.282 | 0.005 | 0.018 | 0.002 | - | - | - | - |
| 57 | B | e | X | 2(f) | 0.05 | 0.27 | 1.44 | 0.014 | 0.012 | 0.016 | 0.024 | 0.020 | 0.002 | 0.260 | 0.710 | 0.190 | 0.270 | 0.004 | 0.020 | 0.001 | - | - | - | - |
| 58 | B | f | X | 2(d) | 0.05 | 0.35 | 2.58 | 0.009 | 0.010 | 0.062 | 0.038 | 0.018 | 0.005 | 0.228 | 0.159 | 0.219 | 0.096 | 0.004 | 0.035 | 0.001 | - | - | - | - |
| 59 | B | g | X | 2(d) | 0.07 | 0.26 | 1.56 | 0.016 | 0.015 | 0.020 | 0.013 | 0.021 | 0.002 | 0.156 | 0.484 | 0.362 | 0.401 | 0.006 | 0.033 | 0.003 | - | - | - | - |
| 60 | B | h | X | 2(d) | 0.06 | 0.20 | 1.45 | **0.043** | **0.037** | 0.047 | 0.025 | 0.028 | 0.004 | 0.088 | 0.766 | 0.573 | 0.111 | 0.004 | 0.045 | 0.004 | - | - | - | - |
| 61 | C | e | V | 3(b) | 0.06 | 0.19 | 1.14 | 0.010 | 0.015 | 0.069 | 0.013 | 0.015 | 0.002 | 0.394 | 0.550 | 0.182 | 0.314 | 0.004 | 0.062 | 0.003 | - | - | - | - |
| 62 | C | e | V | 3(e) | 0.07 | 0.20 | 1.26 | 0.010 | 0.014 | 0.058 | 0.045 | 0.010 | 0.002 | 0.290 | 0.600 | 0.180 | 0.280 | 0.003 | 0.040 | 0.002 | - | - | - | - |
| 63 | C | f | V | 3(b) | 0.06 | 0.26 | **2.55** | 0.009 | 0.011 | 0.050 | 0.040 | 0.017 | 0.006 | 0.204 | 0.259 | 0.320 | 0.148 | 0.007 | 0.019 | 0.001 | - | - | - | - |
| 64 | C | g | V | 3(b) | 0.10 | 0.19 | 1.39 | 0.014 | 0.016 | 0.032 | 0.026 | 0.027 | 0.005 | 0.126 | 0.313 | 0.249 | 0.349 | 0.005 | 0.022 | 0.001 | - | - | - | - |
| 65 | C | h | V | 3(b) | 0.08 | 0.20 | 1.09 | **0.043** | **0.032** | 0.037 | 0.026 | 0.027 | 0.004 | 0.220 | 0.480 | 0.235 | 0.221 | 0.013 | 0.041 | 0.003 | - | - | - | - |
| 66 | D | e | X | 3(d) | 0.07 | 0.37 | 1.03 | 0.011 | 0.013 | 0.003 | 0.033 | 0.014 | 0.002 | 0.199 | 1.327 | 0.068 | 0.338 | 0.006 | 0.046 | 0.001 | - | - | - | - |
| 67 | D | e | X | 3(f) | 0.10 | 0.37 | 1.04 | 0.010 | 0.010 | 0.020 | 0.041 | 0.016 | 0.002 | 0.190 | 1.300 | 0.060 | 0.034 | 0.003 | 0.040 | 0.001 | - | - | - | - |
| 68 | D | f | X | 3(d) | 0.08 | 0.26 | **3.77** | 0.010 | 0.008 | 0.023 | 0.022 | 0.017 | 0.003 | 0.256 | 0.199 | 0.190 | 0.070 | 0.004 | 0.047 | 0.002 | - | - | - | - |
| 69 | D | g | X | 3(d) | 0.11 | 0.23 | 1.17 | 0.014 | 0.012 | 0.024 | 0.035 | 0.013 | 0.005 | 0.077 | 0.923 | 0.047 | 0.225 | 0.010 | 0.050 | 0.002 | - | - | - | - |
| 70 | D | h | X | 3(d) | 0.11 | 0.31 | 0.88 | **0.032** | **0.028** | 0.022 | 0.031 | 0.031 | 0.005 | 0.092 | 0.343 | 0.213 | 0.216 | 0.013 | 0.051 | 0.004 | - | - | - | - |
| 71 | E | e | V | 4(b) | 0.06 | 0.29 | 1.43 | 0.012 | 0.014 | 0.003 | 0.017 | 0.015 | 0.004 | 0.276 | 0.891 | 0.202 | 0.345 | 0.004 | 0.065 | 0.002 | - | - | - | - |
| 72 | E | e | V | 4(e) | 0.09 | 0.38 | 1.46 | 0.011 | 0.012 | 0.010 | 0.019 | 0.020 | 0.003 | 0.280 | 0.850 | 0.130 | 0.280 | 0.005 | 0.040 | 0.002 | - | - | - | - |
| 73 | E | f | V | 4(b) | 0.10 | 0.31 | **3.43** | 0.011 | 0.008 | 0.010 | 0.017 | 0.005 | 0.228 | 0.123 | 0.542 | 0.060 | 0.005 | 0.028 | 0.001 | - | - | - | - | - |
| 74 | E | g | V | 4(b) | 0.10 | 0.37 | 1.45 | 0.013 | 0.012 | 0.005 | 0.014 | 0.020 | 0.008 | 0.047 | 0.647 | 0.308 | 0.427 | 0.005 | 0.027 | 0.001 | - | - | - | - |
| 75 | E | h | V | 4(b) | 0.09 | 0.19 | 1.37 | **0.039** | **0.036** | 0.011 | 0.017 | 0.028 | 0.005 | 0.166 | 1.307 | 0.362 | 0.170 | 0.009 | 0.077 | 0.004 | - | - | - | - |
| 76 | F | e | X | 4(d) | 0.06 | 0.30 | 1.26 | 0.012 | 0.016 | 0.035 | 0.026 | 0.017 | 0.001 | 0.298 | 0.742 | 0.191 | 0.080 | 0.005 | 0.051 | 0.003 | - | - | - | - |
| 77 | F | e | X | 4(f) | 0.06 | 0.33 | 1.35 | 0.012 | 0.017 | 0.033 | 0.031 | 0.010 | 0.001 | 0.290 | 0.630 | 0.180 | 0.060 | 0.005 | 0.050 | 0.002 | - | - | - | - |
| 78 | F | f | X | 4(d) | 0.05 | 0.39 | **3.35** | 0.009 | 0.017 | 0.010 | 0.015 | 0.018 | 0.001 | 0.233 | 0.246 | 0.370 | 0.116 | 0.008 | 0.019 | 0.002 | - | - | - | - |
| 79 | F | g | X | 4(d) | 0.09 | 0.26 | 1.62 | 0.013 | 0.020 | 0.017 | 0.012 | 0.023 | 0.004 | 0.083 | 0.563 | 0.361 | 0.264 | 0.009 | 0.039 | 0.000 | - | - | - | - |
| 80 | F | h | X | 4(d) | 0.07 | 0.20 | 1.20 | **0.038** | **0.036** | 0.021 | 0.017 | 0.019 | 0.006 | 0.207 | 1.250 | 0.382 | 0.246 | 0.007 | 0.052 | 0.002 | - | - | - | - |
| 81 | V | e | X | 3(d) | **0.16** | 0.24 | 0.98 | 0.010 | 0.013 | 0.034 | **0.109** | 0.014 | 0.003 | 0.146 | 1.090 | 0.116 | 0.059 | 0.002 | 0.021 | 0.001 | - | - | - | - |
| 82 | W | e | X | 3(d) | 0.06 | 0.44 | 1.30 | **0.031** | 0.013 | 0.012 | 0.018 | 0.017 | 0.002 | 0.040 | 0.580 | 0.153 | 0.109 | 0.005 | 0.042 | 0.002 | - | - | - | - |
| 83 | X | e | X | 3(d) | 0.06 | 0.20 | 0.95 | 0.016 | **0.031** | 0.017 | 0.038 | 0.013 | 0.001 | 0.105 | 0.790 | 0.183 | 0.173 | 0.003 | 0.048 | 0.004 | - | - | - | - |
| 84 | Y | e | X | 3(d) | 0.07 | 0.12 | **2.60** | 0.014 | 0.013 | 0.037 | 0.006 | 0.013 | 0.002 | 0.098 | 0.491 | 0.199 | 0.097 | 0.006 | 0.019 | 0.002 | - | - | - | - |
| 85 | Z | e | X | 3(d) | 0.07 | **0.75** | 1.38 | 0.017 | 0.011 | **0.176** | 0.016 | 0.016 | 0.002 | 0.107 | 0.644 | 0.174 | 0.170 | 0.004 | 0.055 | 0.003 | - | - | - | - |

*1: The balance consists of Fe and incidental impurities.

[Table 8-1]

| Joint No. | Steel type of steel plate | Wire steel type | Width of weld metal excluding first layer and outermost surface layer W (mm) Maximum value | Width Minimum value | Sectional area of weld metal A (mm²) | Number of welding layers p | First ratio (A/p) (mm²/layer) | Second ratio (p/T) (layer/mm) | Dislocation density at position 1 mm below surface ρ (10¹⁴·m⁻²) | Average crystal grain size at position 1 mm below surface (μm) | Average crystal grain size at center position of plate thickness (μm) | Hot cracking resistance | Resistance to lack of fusion | Room temperature yield stress of weld metal (MPa) | Room temperature tensile strength of weld metal (MPa) | Room temperature tensile strength of welded joint (MPa) | Charpy absorbed energy of weld metal (J) | Charpy absorbed energy at fusion line (J) | Charpy absorption energy at position +1 mm from fusion line (J) | Deposition efficiency (g/min) |
|---|---|---|---|---|---|---|---|---|---|---|---|---|---|---|---|---|---|---|---|---|
| 1 | A | a | 19.3 | 8.5 | 665 | 18 | 36.9 | 0.36 | 0.5 | 6.7 | 9.9 | ○ | ○ | 454.9 | 624.3 | 599.6 | 66.9 | 66.0 | 77.6 | 285 |
| 2 | A | a | 7.9 | **2.9** | 135 | 5 | 27.0 | 0.10 | 0.5 | 6.7 | 9.9 | × | × | 436.8 | 627.6 | 617.8 | **11.2** | **19.3** | 72.9 | 270 |
| 3 | A | b | 19.9 | 8.4 | 654 | 19 | 34.4 | 0.38 | 2.8 | 6.0 | 11.0 | × | ○ | 452.2 | 618.4 | 559.8 | **25.2** | 49.3 | 59.9 | 277 |
| 4 | A | c | 18.9 | 8.2 | 674 | 18 | 37.5 | 0.36 | 1.9 | 7.5 | 8.5 | ○ | ○ | 482.5 | 697.8 | 652.6 | 82.0 | 90.0 | 83.3 | 287 |
| 5 | A | d | **20.4** | 8.6 | 646 | 18 | 35.9 | 0.36 | 1.5 | 8.1 | 14.7 | × | ○ | 469.1 | 663.7 | 604.7 | **22.0** | 49.3 | 60.9 | 282 |
| 6 | B | a | 16.3 | 9.2 | 738 | 19 | 38.8 | 0.38 | 2.5 | 10.5 | 13.4 | ○ | ○ | 444.7 | 595.7 | 579.1 | 79.3 | 73.5 | 76.6 | 306 |
| 7 | B | a | 6.7 | **3.4** | 149 | 5 | 29.8 | 0.10 | 2.5 | 10.5 | 13.4 | × | × | 456.7 | 605.9 | 544.8 | **16.9** | **15.9** | 80.7 | 291 |
| 8 | B | b | 16.6 | 8.8 | 727 | 20 | 36.4 | 0.40 | 1.8 | 8.9 | 8.8 | × | ○ | **318.5** | **495.7** | **505.2** | **20.5** | 36.9 | 71.8 | 286 |
| 9 | B | c | 16.9 | 9.0 | 756 | 21 | 36.0 | **0.42** | 1.6 | 12.4 | 18.4 | ○ | ○ | 465.2 | 651.6 | 610.8 | 96.4 | 87.8 | 72.1 | 283 |
| 10 | B | d | 16.8 | 8.5 | 736 | 20 | 36.8 | 0.40 | 2.6 | 6.1 | 15.1 | × | ○ | 440.2 | 584.5 | 573.2 | **18.6** | 58.3 | 74.6 | 294 |
| 11 | C | a | 30.4 | 8.8 | 1925 | 56 | 34.4 | **0.56** | 2.9 | 5.9 | 4.1 | ○ | ○ | 438.2 | 577.2 | 573.8 | 90.9 | 66.0 | 71.4 | 269 |
| 12 | C | a | 13.4 | **3.6** | 687 | 18 | 38.2 | 0.18 | 2.9 | 5.9 | 4.1 | × | × | 446.8 | 593.8 | 584.2 | **15.8** | **12.4** | 73.4 | 287 |
| 13 | C | b | 29.8 | 8.8 | 1870 | 46 | 40.7 | **0.46** | 1.3 | 3.4 | 8.2 | × | ○ | 441.6 | 585.8 | 577.6 | **9.0** | 39.7 | 53.2 | 320 |
| 14 | C | c | 31.4 | 8.6 | 1853 | 54 | 34.3 | **0.54** | 2.0 | 10.0 | 6.6 | ○ | ○ | 462.7 | 646.1 | 581.1 | 102.8 | 90.2 | 77.8 | 272 |
| 15 | C | d | 30.5 | 8.4 | 1885 | 50 | 37.7 | **0.50** | 1.6 | 7.3 | 11.5 | × | ○ | 471.8 | 670.1 | 618.3 | **25.7** | 51.6 | 62.0 | 295 |
| 16 | D | a | 24.5 | 8.4 | 1964 | 53 | 37.1 | **0.53** | 2.3 | 5.8 | 11.0 | ○ | ○ | 451.6 | 614.5 | 571.6 | 68.4 | 57.9 | 76.2 | 293 |
| 17 | D | a | 8.4 | **3.2** | 731 | 20 | 36.6 | 0.20 | 2.3 | 5.8 | 11.0 | × | × | 449.5 | 609.7 | 565.4 | **12.0** | **15.2** | 69.3 | 320 |
| 18 | D | b | 24.2 | 8.6 | 1943 | 50 | 38.9 | **0.50** | 2.4 | 6.2 | 15.2 | × | ○ | 451.0 | 610.1 | 573.2 | **22.5** | 53.8 | 57.0 | 305 |
| 19 | D | c | 23.8 | 8.6 | 1976 | 55 | 35.9 | **0.55** | 1.0 | 8.3 | 12.5 | ○ | ○ | 446.8 | 602.3 | 574.5 | **23.9** | 53.6 | 64.5 | 280 |
| 20 | D | d | 24.4 | 8.2 | 1926 | 54 | 35.7 | **0.54** | 1.6 | 3.7 | 13.6 | × | ○ | 471.4 | 666.6 | 623.3 | **23.9** | 53.6 | 64.5 | 280 |
| 21 | E | a | 44.3 | 11.6 | 3961 | 111 | 35.7 | **0.74** | 2.1 | 7.2 | 6.9 | ○ | ○ | 481.9 | 697.3 | 655.6 | 95.9 | 69.2 | 70.2 | 280 |
| 22 | E | a | 18.9 | **3.8** | 1601 | 41 | 37.2 | 0.29 | 2.1 | 7.2 | 6.9 | × | × | 490.2 | 682.2 | 624.3 | **9.4** | 30.5 | 78.0 | 281 |
| 23 | E | b | 43.2 | 11.5 | 3987 | 113 | 35.3 | **0.75** | 3.3 | 9.7 | 8.4 | × | ○ | 458.3 | 635.6 | 580.7 | **25.8** | 39.7 | 56.2 | 277 |
| 24 | E | c | 45.7 | 11.7 | 4019 | 109 | 36.9 | **0.73** | 2.1 | 10.1 | 7.2 | ○ | ○ | 476.1 | 679.1 | 635.6 | 97.0 | 79.0 | 65.5 | 289 |
| 25 | E | d | 44.0 | 11.3 | 4009 | 111 | 36.1 | **0.74** | 1.7 | 4.7 | 16.0 | × | ○ | 490.1 | 720.6 | 688.2 | **26.5** | 53.2 | 113.2 | 282 |
| 26 | F | a | 31.6 | 11.4 | 3844 | 102 | 37.7 | **0.68** | 3.0 | 5.1 | 8.4 | ○ | ○ | 456.7 | 628.6 | 590.9 | 91.3 | 94.1 | 71.7 | 295 |
| 27 | F | a | 10.4 | **3.4** | 1532 | 40 | 38.3 | 0.27 | 3.0 | 5.1 | 8.4 | × | × | 441.2 | 638.9 | 594.7 | **22.4** | **19.4** | 73.0 | 292 |
| 28 | F | b | 32.2 | 11.3 | 3855 | 100 | 38.5 | **0.67** | 1.7 | 5.7 | 14.6 | × | ○ | 360.3 | **509.9** | 537.1 | **23.6** | 43.3 | 64.5 | 304 |
| 29 | F | c | 31.0 | 12.1 | 3799 | 95 | 40.0 | **0.63** | 3.3 | 6.3 | 11.9 | ○ | ○ | 465.5 | 649.1 | 609.1 | 84.0 | 55.8 | 85.2 | 313 |
| 30 | F | d | 34.0 | 12.0 | 3902 | 105 | 37.2 | **0.70** | 2.9 | 6.9 | 17.2 | × | ○ | 513.8 | 786.3 | 725.7 | **27.4** | 50.5 | 61.6 | 293 |
| 31 | G | a | 25.2 | 8.7 | 3847 | 56 | 68.7 | **0.56** | 2.0 | 5.1 | 10.8 | ○ | ○ | 462.0 | 642.1 | 628.8 | 84.7 | 70.1 | 86.5 | 270 |
| 32 | H | a | 24.7 | 9.1 | 1920 | 29 | 66.2 | 0.29 | 1.3 | 11.6 | 11.1 | ○ | ○ | 467.2 | 656.1 | 621.7 | 100.9 | 73.7 | 68.4 | 310 |
| 33 | I | a | 24.9 | 8.9 | 1916 | 23 | 83.3 | 0.23 | 1.3 | 8.1 | 13.2 | ○ | ○ | 447.8 | 600.9 | 560.0 | 90.9 | 78.2 | 70.7 | 332 |
| 34 | J | a | 24.6 | 8.7 | 1906 | 41 | 46.5 | **0.41** | 1.6 | 12.0 | 9.9 | ○ | ○ | 459.7 | 637.1 | 591.8 | 98.6 | 60.5 | 63.9 | 331 |
| 35 | K | a | 25.1 | 8.6 | 1898 | 38 | 49.9 | 0.38 | 3.0 | 8.5 | 9.4 | ○ | ○ | 454.2 | 622.4 | 605.6 | 109.4 | 84.2 | 80.1 | 350 |
| 36 | L | a | 23.5 | 8.7 | 1923 | 45 | 42.7 | **0.45** | 1.5 | 5.7 | 7.9 | ○ | ○ | 442.7 | 589.7 | 570.9 | 77.4 | 58.1 | 81.0 | 474 |
| 37 | M | a | 24.6 | 9.2 | 1959 | 34 | 57.6 | 0.34 | 1.2 | 3.4 | 5.2 | ○ | ○ | 436.4 | 574.8 | 567.6 | 85.4 | 75.5 | 95.7 | 360 |
| 38 | N | a | 23.5 | 9.2 | 1893 | 30 | 63.1 | 0.30 | 1.9 | 8.5 | 6.9 | ○ | ○ | 473.3 | 673.5 | 632.0 | 89.4 | 75.9 | 83.4 | 393 |
| 39 | O | a | 24.8 | 9.2 | 1948 | 32 | 60.9 | 0.32 | 1.4 | 9.8 | 8.3 | ○ | ○ | 446.4 | 598.8 | 535.8 | 81.6 | 66.5 | 68.6 | 383 |
| 40 | P | a | 24.7 | 9.1 | 1940 | 33 | 58.8 | 0.33 | 1.8 | 8.3 | 0.8 | ○ | ○ | 441.8 | 600.1 | 585.9 | 58.0 | 71.1 | 87.9 | 365 |
| 41 | Q | a | 24.5 | 9.2 | 1972 | 31 | 63.6 | 0.31 | 0.9 | 7.3 | 11.6 | ○ | ○ | 447.4 | 604.4 | 577.1 | 104.2 | 80.3 | 86.0 | 398 |
| 42 | R | a | 15.4 | 9.0 | 1967 | 31 | 63.4 | 0.31 | 2.2 | 5.7 | 12.3 | ○ | ○ | 454.6 | 622.5 | 586.7 | 84.9 | 92.8 | 63.6 | 394 |
| 43 | S | a | 25.1 | 9.0 | 1997 | 32 | 62.4 | 0.32 | 1.7 | 10.3 | 6.4 | ○ | ○ | 468.8 | 662.4 | 629.1 | 83.0 | 71.9 | 84.6 | 397 |
| 44 | T | a | 24.5 | 9.1 | 1881 | 33 | 57.0 | 0.33 | 2.8 | 9.0 | 9.0 | ○ | ○ | 462.4 | 645.3 | 599.4 | 106.6 | 82.9 | 90.8 | 358 |
| 45 | U | a | 24.3 | 9.0 | 1948 | 34 | 57.3 | 0.34 | 2.5 | 4.7 | 4.8 | ○ | ○ | 461.1 | 638.1 | 582.4 | 114.0 | 89.1 | 89.5 | 360 |
| 46 | V | a | 24.6 | 8.8 | 1903 | 33 | 57.7 | 0.33 | 1.3 | 8.0 | 10.8 | × | × | 447.6 | 604.1 | 596.8 | **13.0** | **14.9** | **23.1** | 359 |
| 47 | W | a | 24.3 | 9.0 | 1964 | 32 | 61.4 | 0.32 | 2.5 | 6.0 | 10.6 | × | ○ | 457.0 | 629.1 | 607.2 | **16.4** | **25.4** | **17.3** | 384 |
| 48 | X | a | 24.1 | 9.2 | 1985 | 34 | 58.4 | 0.34 | 3.4 | 13.6 | 9.4 | × | ○ | 450.1 | 610.9 | **506.3** | **25.5** | **20.3** | **21.0** | 366 |
| 49 | Y | a | 24.1 | 8.8 | 1939 | 34 | 57.0 | 0.34 | **7.9** | 0.3 | 8.0 | × | ○ | 488.0 | 716.4 | 673.1 | **22.5** | **28.3** | **29.2** | 363 |
| 50 | Z | a | 24.8 | 8.7 | 1951 | 35 | 55.7 | 0.35 | 0.8 | 3.3 | 7.5 | × | ○ | 453.7 | 619.7 | 590.6 | **14.9** | **19.4** | **15.7** | 355 |

[Table 8-2]

| Joint No. | Steel type of steel plate | Wire steel type | Width of weld metal excluding first layer and outermost surface layer W (mm) | | Sectional area of weld metal A (mm²) | Number of welding layers p | First ratio (A/p) (mm²/layer) | Second ratio (p/T) (layer/mm) | Steel plate characteristics | | | Resistance to welding defects | | Mechanical properties of weld metal | | | | | | Deposition efficiency (g/min) |
| --- | --- | --- | --- | --- | --- | --- | --- | --- | --- | --- | --- | --- | --- | --- | --- | --- | --- | --- | --- | --- |
| | | | Maximum value | Minimum value | | | | | Dislocation density at position 1 mm below surface ρ (10¹⁴m⁻²) | Average crystal grain size at position 1 mm below surface (μm) | Average crystal grain size at center position of plate thickness (μm) | Hot cracking resistance | Resistance to lack of fusion | Room temperature yield stress of weld metal (MPa) | Room temperature tensile strength of weld metal (MPa) | Room temperature tensile strength of welded joint (MPa) | Charpy absorbed energy of weld metal (J) | Charpy absorbed energy at fusion line (J) | Charpy absorption energy at position +1 mm from fusion line (J) | |
| 51 | A | e | 17.8 | 6.5 | 489 | 27 | 18.2 | 0.54 | 2.1 | 7.1 | 8.2 | o | × | 442.6 | 587.1 | 552.6 | 86.4 | 68.3 | 96.9 | 57 |
| 52 | A | e | 6.0 | 3.1 | 163 | 8 | 20.4 | 0.16 | 2.1 | 7.1 | 8.2 | × | × | 465.2 | 576.2 | 551.4 | 10.2 | 28.0 | 85.1 | 61 |
| 53 | A | f | 16.0 | 5.3 | 507 | 27 | 18.9 | 0.54 | 1.9 | 7.7 | 9.2 | × | o | 539.2 | 782.9 | 721.0 | 32.5 | 64.4 | 77.7 | 59 |
| 54 | A | g | 17.9 | 5.9 | 483 | 32 | 15.0 | 0.64 | 2.2 | 11.2 | 8.7 | o | o | 475.1 | 680.9 | 641.7 | 81.8 | 67.2 | 86.3 | 47 |
| 55 | A | h | 17.3 | 6.8 | 500 | 28 | 18.2 | 0.55 | 0.7 | 2.4 | 7.2 | × | o | 458.0 | 632.0 | 634.2 | 23.9 | 60.5 | 50.5 | 57 |
| 56 | B | e | 16.2 | 6.0 | 481 | 32 | 15.3 | 0.63 | 1.1 | 7.9 | 11.9 | o | o | 456.2 | 625.7 | 614.5 | 96.5 | 54.4 | 104.0 | 96 |
| 57 | B | e | 4.7 | 2.7 | 195 | 10 | 19.5 | 0.20 | 1.1 | 7.9 | 11.9 | × | × | 455.1 | 643.5 | 635.5 | 7.5 | 12.4 | 113.4 | 81 |
| 58 | B | f | 16.2 | 6.3 | 487 | 35 | 13.8 | 0.71 | 1.9 | 0.6 | 9.0 | × | o | 444.3 | 593.3 | 575.3 | 33.6 | 64.9 | 90.7 | 87 |
| 59 | B | g | 15.9 | 6.5 | 500 | 32 | 15.5 | 0.64 | 2.1 | 9.0 | 14.1 | o | o | 468.2 | 674.6 | 657.8 | 87.5 | 80.9 | 104.4 | 97 |
| 60 | B | h | 17.0 | 7.2 | 465 | 33 | 13.9 | 0.67 | 1.7 | 4.4 | 12.4 | × | o | 464.2 | 647.6 | 637.8 | 26.7 | 47.8 | 64.1 | 88 |
| 61 | C | e | 27.4 | 5.9 | 1513 | 29 | 52.0 | 0.29 | 1.8 | 3.3 | 6.2 | o | o | 445.6 | 627.3 | 614.2 | 84.6 | 67.9 | 69.5 | 73 |
| 62 | C | e | 13.2 | 2.6 | 622 | 20 | 31.1 | 0.20 | 1.8 | 3.3 | 6.2 | × | × | 469.0 | 670.9 | 620.5 | 22.9 | 28.7 | 72.6 | 51 |
| 63 | C | f | 27.0 | 6.3 | 1523 | 29 | 52.2 | 0.29 | 0.5 | 1.7 | 5.5 | × | o | 482.7 | 695.8 | 677.9 | 33.7 | 62.0 | 61.4 | 74 |
| 64 | C | g | 28.3 | 6.1 | 1537 | 29 | 53.7 | 0.29 | 2.4 | 7.9 | 12.0 | o | o | 460.6 | 638.2 | 642.7 | 72.6 | 80.2 | 90.6 | 76 |
| 65 | C | h | 28.1 | 6.9 | 1532 | 30 | 51.4 | 0.30 | 3.4 | 7.8 | 8.8 | × | o | 442.1 | 648.7 | 590.0 | 25.2 | 48.0 | 54.6 | 73 |
| 66 | D | e | 20.1 | 7.3 | 1348 | 29 | 47.3 | 0.29 | 2.6 | 11.0 | 16.5 | o | o | 447.5 | 606.3 | 602.6 | 91.9 | 75.1 | 69.0 | 37 |
| 67 | D | e | 6.2 | 3.4 | 598 | 19 | 31.5 | 0.19 | 2.6 | 11.0 | 16.5 | × | × | 441.4 | 601.8 | 593.9 | 36.1 | 36.0 | 76.5 | 32 |
| 68 | D | f | 20.0 | 6.2 | 1344 | 29 | 46.5 | 0.29 | 1.1 | 12.5 | 15.2 | × | o | 528.5 | 756.5 | 704.1 | 33.7 | 51.7 | 75.8 | 37 |
| 69 | D | g | 21.6 | 6.7 | 1332 | 29 | 45.3 | 0.29 | 2.4 | 5.4 | 10.0 | o | o | 447.5 | 613.3 | 604.4 | 87.7 | 70.1 | 78.3 | 36 |
| 70 | D | h | 20.4 | 6.1 | 1362 | 28 | 48.0 | 0.28 | 2.9 | 4.4 | 7.8 | × | o | 435.9 | 625.4 | 570.4 | 15.4 | 42.6 | 55.3 | 38 |
| 71 | E | e | 37.2 | 5.2 | 3134 | 57 | 55.0 | 0.38 | 1.5 | 7.6 | 17.0 | o | o | 461.4 | 642.8 | 638.6 | 74.1 | 69.1 | 82.3 | 86 |
| 72 | E | e | 23.7 | 3.4 | 1327 | 35 | 37.9 | 0.23 | 1.5 | 7.6 | 17.0 | × | × | 465.2 | 633.7 | 611.9 | 15.8 | 23.4 | 89.2 | 74 |
| 73 | E | f | 37.8 | 6.8 | 3121 | 64 | 49.1 | 0.42 | 2.9 | 7.3 | 9.6 | × | o | 536.5 | 742.9 | 735.4 | 31.6 | 57.4 | 84.6 | 77 |
| 74 | E | g | 38.7 | 6.4 | 3148 | 66 | 47.6 | 0.44 | 2.1 | 7.8 | 12.2 | o | o | 472.4 | 672.8 | 713.0 | 92.5 | 66.9 | 63.1 | 75 |
| 75 | E | h | 37.0 | 7.2 | 3154 | 63 | 50.3 | 0.42 | 1.2 | 2.7 | 15.4 | × | o | 470.1 | 664.7 | 660.4 | 21.9 | 48.7 | 55.6 | 79 |
| 76 | F | e | 26.4 | 5.1 | 2525 | 58 | 43.8 | 0.38 | 2.3 | 11.0 | 9.8 | o | o | 440.3 | 641.4 | 584.1 | 84.8 | 53.8 | 74.9 | 62 |
| 77 | F | e | 15.1 | 3.6 | 1295 | 36 | 36.0 | 0.24 | 2.3 | 11.0 | 9.8 | × | × | 474.4 | 639.2 | 580.7 | 19.9 | 29.0 | 78.3 | 69 |
| 78 | F | f | 28.3 | 7.4 | 2507 | 56 | 44.7 | 0.37 | 1.3 | 9.0 | 8.9 | × | o | 517.5 | 703.4 | 691.1 | 38.1 | 61.2 | 76.6 | 63 |
| 79 | F | g | 25.5 | 6.8 | 2508 | 56 | 44.9 | 0.37 | 1.9 | 8.5 | 4.7 | o | o | 471.1 | 670.6 | 670.1 | 83.3 | 74.8 | 67.3 | 63 |
| 80 | F | h | 26.0 | 6.3 | 2512 | 59 | 42.9 | 0.39 | 2.0 | 10.6 | 14.4 | × | o | 461.9 | 643.4 | 647.7 | 25.9 | 59.7 | 65.5 | 61 |
| 81 | V | e | 19.8 | 7.6 | 1353 | 33 | 41.6 | 0.33 | 2.5 | 0.1 | 12.7 | × | × | 450.4 | 685.0 | 610.4 | 22.8 | 20.5 | 28.7 | 59 |
| 82 | W | e | 22.4 | 6.2 | 1356 | 28 | 48.4 | 0.28 | 1.0 | 8.4 | 11.3 | × | o | 436.1 | 571.9 | 653.9 | 19.0 | 18.0 | 14.8 | 68 |
| 83 | X | e | 22.0 | 6.9 | 1344 | 30 | 44.3 | 0.30 | 2.0 | 14.1 | 10.0 | × | o | 430.4 | 556.4 | 500.4 | 23.1 | 20.4 | 22.2 | 63 |
| 84 | Y | e | 20.7 | 5.7 | 1350 | 30 | 44.6 | 0.30 | 8.4 | 10.7 | 13.8 | × | o | 444.4 | 694.5 | 624.7 | 19.1 | 20.7 | 24.9 | 63 |
| 85 | Z | e | 21.8 | 6.0 | 1349 | 35 | 39.0 | 0.35 | 1.8 | 4.0 | 10.8 | × | o | 446.6 | 601.5 | 593.3 | 24.6 | 20.4 | 18.3 | 55 |

In all of the examples (hereinafter, referred to as "inventive examples") in which the steel plates and the weld metals were within the preferred range of the present invention, the welded joints were sound without any welding defect, such as hot cracking or lack of fusion. In each of the inventive examples, the room temperature yield strength (0.2% proof stress) of the weld metal was 325 MPa or more, the tensile strength thereof was 520 MPa or more, and the room temperature tensile strength of the welded joint was 520 MPa or more. Furthermore, in each of the inventive examples, the absorbed energy ($_vE_{-40}$) of the weld metal and heat-affected zone in the Charpy impact test at a test temperature of -40°C was 30 J or more, and the welded joint had the weld metal having both high strength and excellent low-temperature toughness.

In contrast, in the examples falling outside the preferred range of the steel plate and weld metal of the present invention, hot cracking occurred and the hot cracking resistance was reduced, or lack of fusion was observed. One or more of the mechanical properties, such as the yield strength (0.2% proof stress) and tensile strength of the weld metal at room temperature, the room temperature tensile strength of the welded joint, and the absorbed energy ($_vE_{-40}$) of the Charpy impact test of the weld metal and heat-affected zone at a test temperature of -40°C, were at slightly lower levels.

Reference Signs List

1　steel plate
2　weld metal
3　fusion line
T　plate thickness
A　sectional area of entire weld metal
$L_i$　weld layer (i = 1 to p layers), ($L_1$: first layer, $L_p$: outermost surface layer)
$W_i$　width of weld layer (i = 1 to p layers)

Claims

1. A welded joint of steel plates having a plate thickness T (mm) of 50 to 160 mm, comprising:

a weld metal including three or more layers,
wherein a width W (mm) of each layer of the weld metal excluding a first layer and an outermost surface layer is in a range of 5.0 mm or more and 0.4T mm or less.

2. The welded joint of steel plates according to Claim 1, wherein a first ratio [A/p] of a sectional area A ($mm^2$) of the weld metal in a direction perpendicular to a weld line to the number of weld layers p (layers) is 120.0 $mm^2$/layer or less, and a second ratio [p/T] of the number of weld layers p to the plate thickness T is 0.40 layers/mm or less.

3. The welded joint of steel plates according to Claim 1 or 2, wherein each of the steel plates has a chemical composition containing, by mass%:

C: 0.04% to 0.14%,
Si: 0.03% to 0.70%,
Mn: 0.30% to 2.50%,
P: 0.030% or less,
S: 0.020% or less,
Nb: 0.001% to 0.100%,
Al: 0.001% to 0.100%,
O: 0.0100% or less, and
N: 0.0100% or less,
the balance being Fe and incidental impurities,
Ceq defined by Expression (1) and the plate thickness (T) satisfy:

$$0.0004T + 0.25 \leq Ceq \leq 0.0004T + 0.45,$$

a dislocation density $\rho$ at a position 1 mm below a surface of each steel plate is $4.0 \times 10^{14}$ $m^{-2}$ or less,
an average crystal grain size at the position 1 mm below the surface of each steel plate is 15.0 $\mu$m or less, and an average crystal grain size at a center position of the plate thickness is 20.0 $\mu$m or less,

Ceq = [C] + [Mn]/6 + ([Cr] + [Mo] + [V])/5 + ([Cu] + [Ni])/15          (1)

where each element symbol in Expression (1) represents an amount of a corresponding element (mass%), and is 0 when the element is not contained.

4. The welded joint of steel plates according to Claim 3, wherein the chemical composition of each steel plate further contains, by mass%, one or two or more selected from the group consisting of:

Cu: 2.000% or less,
Ni: 2.500% or less,
Cr: 1.500% or less,
Mo: 1.000% or less,
Ti: 0.100% or less,
V: 0.300% or less,
B: 0.0100% or less,
W: 0.500% or less,
Ca: 0.0200% or less,
Mg: 0.0200% or less, and
REM: 0.0500% or less.

5. The welded joint of steel plates according to Claim 1 or 2, wherein the weld metal has a chemical composition containing, by mass%:

C: 0.04% to 0.14%,
Si: 0.03% to 0.70%,
Mn: 0.30% to 2.50%,
P: 0.030% or less,
S: 0.020% or less,
Nb: 0.001% to 0.100%,
Al: 0.001% to 0.100%,
Cu: 0.001% to 2.000%,
Ni: 0.001% to 2.500%,
Cr: 0.001% to 1.500%,

Mo: 0.001% to 1.000%,
Ti: 0.001% to 0.100%,
V: 0.001% to 0.300%,
B: 0.001% to 0.020%,
O: 0.050% or less, and
N: 0.010% or less,
the balance being Fe and incidental impurities.

6. The welded joint of steel plates according to Claim 3, wherein the weld metal has a chemical composition containing, by mass%:

C: 0.04% to 0.14%,
Si: 0.03% to 0.70%,
Mn: 0.30% to 2.50%,
P: 0.030% or less,
S: 0.020% or less,
Nb: 0.001% to 0.100%,
Al: 0.001% to 0.100%,
Cu: 0.001% to 2.000%,
Ni: 0.001% to 2.500%,
Cr: 0.001% to 1.500%,
Mo: 0.001% to 1.000%,
Ti: 0.001% to 0.100%,
V: 0.001% to 0.300%,
B: 0.001% to 0.020%,
O: 0.050% or less, and
N: 0.010% or less,
the balance being Fe and incidental impurities.

7. The welded joint of steel plates according to Claim 4, wherein the weld metal has a chemical composition containing, by mass%:

C: 0.04% to 0.14%,
Si: 0.03% to 0.70%,
Mn: 0.30% to 2.50%,
P: 0.030% or less,
S: 0.020% or less,
Nb: 0.001% to 0.100%,
Al: 0.001% to 0.100%,
Cu: 0.001% to 2.000%,
Ni: 0.001% to 2.500%,
Cr: 0.001% to 1.500%,
Mo: 0.001% to 1.000%,
Ti: 0.001% to 0.100%,
V: 0.001% to 0.300%,
B: 0.001% to 0.020%,
O: 0.050% or less, and
N: 0.010% or less,
the balance being Fe and incidental impurities.

8. The welded joint of steel plates according to Claim 5, wherein the chemical composition of the weld metal further contains, by mass%, one or two or more selected from the group consisting of:

W: 0.500% or less,
Ca: 0.0200% or less,
Mg: 0.0200% or less, and
REM: 0.0500% or less.

9. The welded joint of steel plates according to Claim 6, wherein the chemical composition of the weld metal further contains, by mass%, one or two or more selected from the group consisting of:

    W: 0.500% or less,
    Ca: 0.0200% or less,
    Mg: 0.0200% or less, and
    REM: 0.0500% or less.

10. The welded joint of steel plates according to Claim 7, wherein the chemical composition of the weld metal further contains, by mass%, one or two or more selected from the group consisting of:

    W: 0.500% or less,
    Ca: 0.0200% or less,
    Mg: 0.0200% or less, and
    REM: 0.0500% or less.

11. A method for manufacturing the welded joint of steel plates according to Claim 1 or 2, comprising: generating arcs from multiple welding electrodes and performing welding by submerged arc welding.

12. A method for manufacturing the welded joint of steel plates according to Claim 3, comprising: generating arcs from multiple welding electrodes and performing welding by submerged arc welding.

13. A method for manufacturing the welded joint of steel plates according to Claim 4, comprising: generating arcs from multiple welding electrodes and performing welding by submerged arc welding.

14. A method for manufacturing the welded joint of steel plates according to Claim 5, comprising: generating arcs from multiple welding electrodes and performing welding by submerged arc welding.

15. A method for manufacturing the welded joint of steel plates according to Claim 6, comprising: generating arcs from multiple welding electrodes and performing welding by submerged arc welding.

16. A method for manufacturing the welded joint of steel plates according to Claim 7, comprising: generating arcs from multiple welding electrodes and performing welding by submerged arc welding.

17. A method for manufacturing the welded joint of steel plates according to Claim 8, comprising: generating arcs from multiple welding electrodes and performing welding by submerged arc welding.

18. A method for manufacturing the welded joint of steel plates according to Claim 9, comprising: generating arcs from multiple welding electrodes and performing welding by submerged arc welding.

19. A method for manufacturing the welded joint of steel plates according to Claim 10, comprising: generating arcs from multiple welding electrodes and performing welding by submerged arc welding.

# FIG. 1

OUTERMOST SURFACE
LAYER ($L_p$)

FIRST
LAYER ($L_1$)

$5.0\,(mm) \leqq Wi\,(EXCLUDING\ 1\ AND\ p) \leqq 0.4T(mm)$
$A/p \leqq 120.0\,(mm^2/LAYER)$
$p/T \leqq 0.40\,(LAYER/mm)$

FIG. 2

FIG. 3

FIG. 4

## INTERNATIONAL SEARCH REPORT

| International application No. |
|---|
| **PCT/JP2024/003363** |

**A. CLASSIFICATION OF SUBJECT MATTER**

***B23K 9/18***(2006.01)i; ***B23K 9/095***(2006.01)i; ***B23K 35/30***(2006.01)i; ***C21D 8/02***(2006.01)i; ***C22C 38/00***(2006.01)i; ***C22C 38/12***(2006.01)i; ***C22C 38/58***(2006.01)i

FI: B23K9/18 F; B23K9/095 501G; B23K9/18 A; B23K35/30 320A; C21D8/02 B; C22C38/00 301B; C22C38/12; C22C38/58

According to International Patent Classification (IPC) or to both national classification and IPC

**B. FIELDS SEARCHED**

Minimum documentation searched (classification system followed by classification symbols)

B23K9/18; B23K9/095; B23K35/30; C21D8/02; C22C38/00; C22C38/12; C22C38/58

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 55-84278 A (NIPPON STEEL CORP.) 25 June 1980 (1980-06-25) specification, column 1, lines 18-20, column 4, line 12 to column 11, line 16, table 1, fig. 5 | 1-2, 5, 8, 11, 14, 17 |
| Y | | 3-4, 6-7, 9-10, 12-13, 15-16, 18-19 |
| Y | WO 2021/054344 A1 (JFE STEEL CORPORATION) 25 March 2021 (2021-03-25) paragraphs [0019]-[0024] | 3-4, 6-7, 9-10, 12-13, 15-16, 18-19 |
| A | JP 55-120488 A (NIPPON STEEL CORPORATION) 16 September 1980 (1980-09-16) entire text, all drawings | 1-19 |
| A | JP 55-84280 A (NIPPON STEEL CORP.) 25 June 1980 (1980-06-25) entire text, all drawings | 1-19 |
| A | JP 59-212176 A (KAWASAKI STEEL CORP.) 01 December 1984 (1984-12-01) entire text, all drawings | 1-19 |

☐ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **19 March 2024** | **02 April 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/003363**

| Patent document cited in search report | | | Publication date (day/month/year) | Patent family member(s) | Publication date (day/month/year) |
|---|---|---|---|---|---|
| JP | 55-84278 | A | 25 June 1980 | (Family: none) | |
| WO | 2021/054344 | A1 | 25 March 2021 | EP 4032992 A1 paragraphs [0024]-[0026] CN 114402089 A KR 10-2022-0047363 A | |
| JP | 55-120488 | A | 16 September 1980 | (Family: none) | |
| JP | 55-84280 | A | 25 June 1980 | (Family: none) | |
| JP | 59-212176 | A | 01 December 1984 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4673710 B
- JP 2006212676 A
- JP 2021126696 A
- WO 2013073565 A

**Non-patent literature cited in the description**

- **G.K. WILLIAMS** ; **W.H. HALL**. *Acta Metall.*, 1953, vol. 1, 22